(19) Europäisches Patentamt
European Patent Office
Office européen des brevets

(11) **EP 2 455 436 B1**

(12) **EUROPÄISCHE PATENTSCHRIFT**

(45) Veröffentlichungstag und Bekanntmachung des Hinweises auf die Patenterteilung:
**12.09.2018  Patentblatt 2018/37**

(51) Int Cl.:
***C09J 103/00*** *(2006.01)*

(21) Anmeldenummer: **10191147.7**

(22) Anmeldetag: **15.11.2010**

(54) **Klebstoffzusammensetzung auf Stärkebasis**

Starch-based adhesive compound

Composition de colle à base d'amidon

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**23.05.2012  Patentblatt 2012/21**

(73) Patentinhaber: **Agrana Stärke GmbH**
**3950 Gmünd (AT)**

(72) Erfinder:
 • **Mann, Karl-Jürgen**
  **1150, Wien (AT)**
 • **Kozich, Martin**
  **1220, Wien (AT)**
 • **Grüll, Dietmar**
  **3442, Langenrohr, Langenschönbichl (AT)**
 • **Wastyn, Marnik Michel**
  **2320, Schwechat (AT)**

(74) Vertreter: **Sonn & Partner Patentanwälte**
**Riemergasse 14**
**1010 Wien (AT)**

(56) Entgegenhaltungen:
**EP-A1- 0 690 170        EP-A1- 1 943 908
US-A- 5 753 468        US-A1- 2003 109 010
US-A1- 2009 142 812**

 • **Kawabata et al.: "Preparation of highly branched starch by glycogen branching enzyme from Neurospora crasse N2-44 and its characterization.", J. Appl. Glycosci., Bd. 49, Nr. 3 1. Januar 2002 (2002-01-01), Seiten 273-279, XP002617805, Gefunden im Internet: URL:http://rms1.agsearch.agropedia.affrc.go.jp/contents/JASI/pdf/society/65-2228.pdf [gefunden am 2011-01-20]**
 • **KAJIURA H ET AL: "Structure and solution properties of enzymatically synthesized glycogen", CARBOHYDRATE RESEARCH, PERGAMON, GB, Bd. 345, Nr. 6, 19. April 2010 (2010-04-19), Seiten 817-824, XP026984255, ISSN: 0008-6215 [gefunden am 2010-01-28]**

**Beschreibung**

Die vorliegende Erfindung betrifft eine Klebstoffzusammensetzung basierend auf enzymatisch modifizierter Stärke (EMS), welche mit einem Verzweigungsenzym behandelt wurde, eine hoch homogene Molmassenverteilung und ausgezeichnete Klebeeigenschaften aufweist.

Stärke ist ein Polymer aus Glucoseeinheiten, welche durch alpha-1,4-glycosidische und alpha-1,6-glycosidische Bindungen verknüpft sind. Höher verzweigte Stärke weist zusätzliche alpha-1,6-glycosidische Verknüpfungen auf. Grundsätzlich werden zwei Fraktionen der Stärke unterschieden, nämlich Amylose und Amylopektin. Amylose besteht aus nahezu unverzweigten Ketten von Anhydroglucoseeinheiten (AGU), die vorzugsweise durch alpha-1,4-glycosidische Verknüpfungen verbunden sind. Bei Amylopektin sind in gleicher Weise zahlreiche Anhydroglucoseeinheiten miteinander verknüpft, nur sind die Molmasse und die Zahl der Verzweigungen deutlich höher. Der Verzweigungsgrad des natürlichen Amylopektins beträgt in der Regel ca. 3-4%, demzufolge entfallen von 100 Bindungen zwischen den Anhydroglukoseeinheiten 96- 97 auf alpha-1,4-Bindungen und 4- 3 auf alpha-1,6-Bindungen. Die Menge des Amylopektins überwiegt bei weitem bei den technisch verwendeten Stärkearten und beträgt meist etwa 80%. So ist beispielsweise der Anteil von Amylose in Mais 23%, in Weizen 19%, in Reis 14%, in Kartoffeln 18% und in Wachsmaisstärke ca. 3% (Durchschnittswerte).

Neben dem unterschiedlichen Verzweigungsgrad ist auch der Polymerisierungsgrad von Amylopektin und Amylose unterschiedlich. Z.B. liegen in Maisstärke die Polymerisierungsgrade (Zahl der verknüpften Anhydroglukoseeinheiten pro Stärkemolekül) bei Amylose zwischen 260 und 800 und bei Amylopektin zwischen 280 bis 35 000. Bei Kartoffelstärken liegen höhere Polymerisierungsgrade vor: bei Amylose von 240 bis 3 800 und für Amylopektin zwischen 1 100 und 220 000.

Native Stärke kommt in der Natur in Stärkegranulat bzw. - korn vor und wird für verschiedene industrielle Anwendungen gegebenenfalls aufgeschlossen. Da native Stärke nicht wasserlöslich ist, wird sie bei erhöhter Temperatur oder durch Alkalieinwirkung in eine lösliche Form überführt. Dennoch ist die Amylosefraktion meist schlecht wasserlöslich und nach Abkühlung können sich kristalline Aggregate durch Wasserstoffbrückenbildung bilden. Dieser Prozess wird als Retrogradation bezeichnet. Amylopektin ist im Allgemeinen besser löslich und weniger für Retrogradation anfällig. Dennoch kann auch bei Amylopektinstärken keine Langzeitstabilität einer Lösung erzielt werden.

In der Verpackungstechnik steigt stetig der Anspruch nach hohen Arbeitsgeschwindigkeiten bei der maschinellen Papierverarbeitung. Laufeigenschaften des Leims, Dichtigkeit und Verklebbarkeit der Verpackungspapiere sowie die Trocknungsgeschwindigkeit der verwendeten Klebstoffe sind wesentliche Elemente. Um eine große Anzahl von Packungen in der Zeiteinheit ausbringen zu können, verlangt man von dem aufgetragenen Klebstoff, dass dieser möglichst schnell abbindet. Hierbei sollen sich die Klebenähte innerhalb weniger Sekunden zumindest soweit verfestigt haben, dass ein Transport der Packung in der Verpackungslinie möglich ist.

Stärke ist ein weitverbreitetes Ausgangsmaterial für Klebstoffe. Unter Klebstoffen versteht man nach DIN 16.920 nichtmetallische Stoffe, die Fügeteile durch Flächenhaftung und innere Festigkeit verbinden. "Klebstoff" ist ein Oberbegriff und schließt andere gebräuchliche Begriffe, die nach physikalischen, chemischen oder verarbeitungstechnischen Gesichtspunkten gewählt wurden, wie Leim, Kleister, Dispersionsklebstoff, Kontakt- oder Haftklebstoff u.a.m., ein. Von echten Klebstoffen werden reine Adhäsive unterschieden, welche nur als Oberflächenbehandlungsmittel aufgetragen werden können, wie z.B. Beschichtungs- oder Schlichtemittel.

Stärkekleb- oder Beschichtungsmittel werden in der Regel durch Erhitzung von Stärke gewonnen. Das führt zum Aufbrechen der Stärkekörner und zur Bildung eines fluiden Stärkegels. In dieser Form liegt Stärke nicht als gelöster Stoff vor, sondern als kolloide Suspension. Eine solche Paste hat bereits eine hohe Viskosität und kann als Klebemittel oder Beschichtungsmittel eingesetzt werden. Moderne Stärkekleber oder Kleister können modifiziert sein, um einerseits die Viskosität zu verringern und um andererseits möglichst stabile Klebe- oder Beschichtungsmittel zu erhalten. Diese Behandlungen können enzymatische, physikalische und/oder chemische Behandlungsschritte wie Alkalibehandlung, Säurebehandlung und Oxidation umfassen. Durch solche Verfahren kann auch die Gelbildungstemperatur verringert werden, sodass die Stärke bereits bei Raumtemperatur in Gelform vorliegt.

In den letzten Jahrzehnten haben sich synthetische Leime auf Basis von Polyvinylalkohol oder Polyvinylacetat etabliert, die mit Feststoffgehalten von bis zu 65% erhältlich sind. Nichts desto trotz zeigen Stärke basierende Klebstoffe einige wesentliche Vorteile gegenüber synthetischen Leimen:

    1. Nachwachsender Rohstoff (Green Label)
    2. Keine Umwelt belastende flüchtige Bestandteile in der Trocknungsluft
    3. Max. Reduktion der Leimmenge am Leimspalt
    4. Einfache Entsorgung von Leimrückständen
    5. Unkomplizierte Handhabung
    6. Sehr gute Fließfähigkeit

Dextrine sind (stark) abgebaute bzw. hydrolytisch gespaltene Stärkeprodukte. Bei der Bildung von Dextrinen wird durch Hitze und Säurebehandlung Stärke in kleine polymere Fragmente gespalten, welche gegebenenfalls zu einem hochverzweigten Polymer mit mittlerer Größe repolymerisieren können. Je nach unterschiedlicher Säure- und Hitzebehandlung werden Weißdextrine und Gelbdextrine unterschieden. Maltodextrine entstehen durch den enzymatischen Abbau von Stärke mit Amylasen. Je nach Amylase-Typ werden unterschiedliche Produkte erhalten. Durch die hydrolytische Spaltung der Stärke in kleinere Fragmente erhöht sich der Anteil an reduzierenden Enden und somit der DE-Wert. Im Gegensatz zur Stärke sind Dextrine üblicherweise in Wasser löslich. Dennoch kann auch bei Dextrinen eine Retrogradation bei längerer flüssiger Aufbewahrung auftreten, das ist insbesondere bei hohen Konzentrationen der Fall.

Das Anwendungsgebiet der stärkehaltigen Klebstoffe erstreckt sich von der breiten industriellen Verwendung bis zu Alltagsklebern, bei denen insbesondere die biologische Abbaubarkeit und umweltfreundliche Herstellung vorteilhaft hervor sticht. So werden Stärkeklebstoffe häufig für Wandbelege und Tapeten, für die Zigarettenherstellungen und -verpackungen, zum Etikettieren von Flaschen, für Briefumschläge, zur Herstellung von Wellpappe, als Verpackungsklebstoffe, bei der Herstellung von Buchdecken oder bei der Verklebung von Papier eingesetzt. In der Papierindustrie wird Stärke auch als Beschichtungsmittel eingesetzt, um z.B. Tintenfestigkeit zu gewährleisten. Je nach Anwendung kommen lösliche Stärkederivate, dünnkochende Stärken mit einem bestimmten Feststoffanteil bis zu zähen, elastischen und fadenziehenden Kleistern zum Einsatz. Insbesondere beim Verkleben von bedruckten Papiermaterialien ist eher eine geringe Viskosität und eine gleichmäßige Auftragbarkeit der Stärke gefragt, welche zu keinem oder geringem Quellen des Papiers und einer damit verbundenen Verformung führt, gefragt. Zusätzlich muss die Stärke eine hohe Klebefestigkeit aufweisen. Diese Eigenschaften stehen bei herkömmlichen Stärken oft im Widerspruch.

Die EP 0 990 687 A2 beschreibt einen Klebstoff auf Amylopektin-Kartoffelstärkebasis. Amylopektin-Kartoffelstärke ist eine spezielle Amylopektinstärke, die durch eine gentechnisch veränderte Kartoffel hergestellt wird, welche in ihrer Amylosebildung inhibiert wurde. Diese Amylopektin-Kartoffelstärke weist spezielle Eigenschaften auf, ist hochmolekular und wird in der Regel für spezielle Anwendungen modifiziert oder teilweise abgebaut.

Die EP 1 369 432 A2 betrifft eine hochverzweigte Stärke zur Anwendung in der Nahrungsmittel- und Pharmaindustrie. Diese Stärke wird durch Anwendung eines Verzweigungsenzyms hergestellt und zeichnet sich durch eine biologisch verträgliche Osmolarität aus. Die Osmolarität ist insbesondere auf das Darmumfeld optimal eingestellt. Das eingesetzte Verzweigungsenzym entstammt beispielsweise dem Mikroorganismus *B. Stearothermophilus* bzw. *Chlamydomonas reinhardtii* wie in der WO 00/18893 A1 beschrieben. Diese - letztendlich nur für die Nahrungsmittel- und pharmazeutische Industrie auch geeigneten - erhaltenen Stärken eignen sich nicht als Klebstoff sondern sollen eine kontrollierte Verdauung fördern.

Die US 2003/0109010 betrifft Verfahren zur Modifizierung von Stärke mittels Verzweigungsenzymen, bspw. aus *E.Coli,* Kartoffel, *Bacillus Megaterium* oder *Bacillus Stearothermophilus.* Durch den Einsatz der verzweigenden Enzyme wird der Verzweigungsgrad und der Anteil der reduzierenden Zucker erhöht und die durchschnittliche Molmasse sowie die Viskosität reduziert. Die modifizierten Stärken werden insbesondere zur Veränderung der Beschaffenheit von Nahrungsmitteln und des Mundgefühls eingesetzt.

Die WO 03/106502 A1 betrifft enzymatisch verzweigte Dextrine mit einem Polymerisierungsgrad (Degree of Polymerisation, DP) von mehr als 4 000, welche im Wesentlichen frei von zyklischen Strukturen sind. Hierbei wird ein Verzweigungsenzym der Rhodothermus-Spezies, wie beispielsweise *Rhodothermus Obamensis* oder *Rhodothermus Marinus* eingesetzt. Diese Verzweigungsenzyme wurden erstmals in der WO 00/58445 A1 beschrieben. Die hochverzweigten Stärken sollen als Zusatzstoff für Nahrungsmittel oder in Getränken verwendet werden oder als Beschichtungs- oder Schlichtemittel in der Papierindustrie.

Die EP 0 690 170 B1 betrifft ein Verfahren zum Leimen der Oberfläche von Papier, eine reine Oberflächenbehandlung, mit einem Schlichtemittel auf Stärkebasis. Diese Stärke kann durch ein verzweigendes Enzym (E.C. 2.4.1.18) oder eine Cyclodextringlucosyltransferase (E.C. 2.4.1.19) modifiziert sein.

Der vorliegenden Erfindung liegt die Aufgabe zugrunde neue Klebstoffe zur Verfügung zu stellen, welche eine geringe Viskosität unter anderem bei hohem Feststoffgehalt, eine äußerst hohe Klebkraft, sowie eine ausgeprägte Langzeitstabilität in flüssiger Form aufweisen, sodass eine Aufbewahrung in Form einer flüssigen Zusammensetzung ermöglicht wird. Diese Aufgabe wurde durch eine erfindungsgemäße Klebstoffzusammensetzung gelöst, welche enzymatisch modifizierte Stärke enthält, welche durch Modifizierung einer Ausgangsstärke durch ein Verzweigungsenzyms künstlich verändert wurde. Im speziellen wurde diese Aufgabe durch die Gegenstände der Ansprüche gelöst. Gemäß der vorliegenden Erfindung wurde festgestellt, dass diese speziell modifizierten Stärkederivate, basierend auf der enzymatischen Modifizierung mittels eines Verzweigungsenzyms, eine äußerst hohe Klebkraft aufweisen. Zusätzlich haben diese Stärkederivate den Vorteil einer äußerst hohen Langzeitstabilität in flüssiger oder wässriger Form. Bisherige Stärkekleber oder -kleister wurden aufgrund mangelnder Langzeitstabilität nur als kurz vor Anwendung einzurührende Feststoffe zur Verfügung gestellt. Die vorliegende Erfindung erlaubt nun die Anwendung von flüssigen, insbesondere wässrigen, stärkehaltigen Klebstoffzusammensetzungen, welche über Monate hinweg gelagert werden können, ohne nachzudicken und ohne sich zu verfestigen.

In einer besonderen ausführungsform betrifft die vorliegende Erfindung daher eine Klebstoffzusammensetzung umfassend enzymatisch verzweigte Stärke mit einem Viskositätsstabilitätsindex SI von kleiner oder gleich 1,3, bestimmt durch den Quotient aus der Viskosität nach 14 Tagen und der Viskosität nach 2 Stunden nach Herstellung der Zusammensetzung, wobei die Stärke ein mittleres Molekulargewicht Mw (Gewichstmittel), gemessen durch Lichtstreuung, von 60 kDa bis 3000 kDa hat.

Diese enzymatisch modifizierten Stärken können erfolgreich zum Kleben eingesetzt werden. Daher betrifft die vorliegende Erfindung vordergründig eine Klebstoffzusammensetzung bzw. einen Kleister. Als "Stärke" wird hierin nicht nur der Ausgangsstoff (native oder modifizierte Stärke für die Behandlung mit dem Enzym) bezeichnet, sondern auch die erfindungsgemäßen enzymatisch modifizierten Produkte, welche künstlich durch *in vitro* Behandlung mit einem Verzweigungsenzym erhältlich sind.

In speziellen Ausführungsformen haben diese Stärken einen DE (Dextroseequivalent)-Wert von kleiner gleich 1. Das Dextrose-Äquivalent (DE) eines Polysaccharid-Gemischs bezeichnet den prozentualen Anteil reduzierender Zucker an der Trockensubstanz. Es entspricht der Menge Glucose (= Dextrose), die je 100 g Trockensubstanz das gleiche Reduktionsvermögen hat. Der DE-Wert ist ein Maß dafür, wie weit der hydrolytische Polymerabbau erfolgt ist, daher erhalten Produkte mit niedrigem DE-Wert einen hohen Anteil an Polysacchariden und einen niedrigen Gehalt an niedermolekularen Zuckern, während Erzeugnisse mit hohem DE-Wert hauptsächlich nur noch aus niedermolekularen Zuckern bestehen. Das Dextrose-Äquivalent von Stärke beträgt 0, das von Glucose 100. Das von Maltodextrin liegt je nach Hydrolysegrad zwischen 3 und 20. Produkte mit DE-Werten über 20 werden den Glukosesirupen zugerechnet.

Der äußerst niedrige DE-Wert der erfindungsgemäßen Stärkederivate zeigt, dass die Stärkemoleküle sich von Stärkemolekülen, welche durch hydrolytische Spaltung - wie bei den alpha-Amylasen - erhältlich sind (z.B. Maltodextrine), unterscheiden. In speziellen Ausführungsformen ist der DE-Wert kleiner gleich 1, kleiner gleich 0,9, kleiner gleich 0,8, kleiner gleich 0,7, kleiner gleich 0,6, kleiner gleich 0,5, kleiner gleich 0,4, kleiner gleich 0,35, kleiner gleich 0,3, kleiner gleich 0,25, kleiner gleich 0,2 oder kleiner gleich 0,1. Der DE-Wert kann beispielsweise durch im Stand der Technik übliche Methoden wie z.B. nach Fehling bestimmt werden. Alternativ kann für die Bestimmung geringer Anteile an reduzierenden Enden auch die modifizierte Park-Johnson-Methode von Hizukuri et al. (Carbohydrate Research, 94: 205-213 (1981)) verwendet werden. Besonders auffällig ist, dass die erfindungsgemäßen Stärkederivate eine äußerst homogene Molmassenverteilung zeigen, die man durch die eingesetzte Enzymmenge und die Reaktionszeit einstellen kann. Ohne auf eine bestimmte Theorie limitiert zu sein, scheint es, dass große Stärkemoleküle somit in Richtung dieses kleineren Bereichs zerteilt und kleinere Stärkemoleküle zusammengefügt werden, wobei alle Stärkemoleküle zusätzlich verzweigt werden und somit einen höheren Verzweigungsgrad als die Ausgangsstärke aufweisen.

Ein weiterer vorzugsweiser Vorteil der erfindungsgemäß enzymatisch modifizierten Stärken ist, dass sie farbneutral bzw. weiß ist. Im Gegensatz zu z.B. verfärbten Röstdextrinen, werden daher verzweigte Stärkeprodukte erhalten, welche für das Verkleben von (zumindest teilweise transparenten) Objekten geeignet sind. Somit können problemlos Objekte oder Produkte, bei denen der Klebstoff sichtbar sein oder sichtbar werden könnte, verklebt werden. Insbesondere ist dies ein Erfordernis bei zahlreichen Anwendungen in der Papier- oder Kartonindustrie. Die Farbeindruck "weiß" entspricht einem subjektiven Empfinden eines Menschen, dass alle drei Zapfen in der Netzhaut des Auges in gleicher Weise und mit ausreichend hoher Intensität gereizt werden. Zur Farbdarstellung wurde daher das RGB-System entwickelt, welches das Verhalten an der Netzhaut wiederspiegelt. "Rein Weiß" ist gemäß dem RGB System 1,0, 1,0, 1,0 (oder 100%, 100%, 100%), für den roten, grünen und blauen Lichtanteil. Gemäß der vorliegenden Erfindung soll unter "weiß" bzw. "farbneutral" Verstanden werden, wenn diese Lichtanteile annähernd gleich sind, insbesondere innerhalb von 5%, vorzugsweise 3%, im speziellen innerhalb 1%, maximaler Abweichung zueinander.

In speziellen Ausführungsformen ist die mittlere Molmasse Mn (Zahlmittel) der Stärke 40 kDa (Kilodalton) bis 600 kDa, ermittelt durch Lichtstreuung. Besonders vorzugsweise Eigenschaften hat die erfindungsgemäß modifizierte Stärke bei einer mittleren Molmasse Mn (Zahlmittel) ab 40 kDa, ermittelt durch Lichtstreuung. In speziell bevorzugten Ausführungsformen ist die mittlere Molmasse Mn mindestens 45 kDa, mindestens 50 kDA, mindestens 53 kDa, mindestens 55 kDa, mindestens 60 kDa, ermittelt durch Lichtstreuung. Als Obergrenze ist in vorzugsweisen Ausführungsformen die mittlere Molmasse Mn kleiner gleich 600 kDa, kleiner gleich 550 kDa, kleiner gleich 500 kDa, kleiner gleich 450 kDa, kleiner gleich 400 kDa, kleiner gleich 350 kDa, kleiner gleich 300 kDa, kleiner gleich 250 kDa, kleiner gleich 200 kDa, kleiner gleich 150 kDa, kleiner gleich 100 kDa, kleiner gleich 90 kDa, kleiner gleich 85 kDa, kleiner gleich 80 kDa, kleiner gleich 70 kDa, ermittelt durch Lichtstreuung.

Bei der Molmassenbestimmung von Stärke müssen zwei wesentliche Verfahren unterschieden werden, nämlich die Bestimmung der Molmasse durch Lichtstreuung und die Bestimmung der Molmasse relativ zu bekannten Standardsubstanzen (konventionelle SEC). In beiden Fällen werden die Moleküle in einem Säulensystem mit poröser Füllung nach ihrem hydrodynamischen Volumen (Molekülgröße in Lösung) aufgetrennt und anschließend mittels eines Konzentrationsdetektors, im Speziellen eines RI (Refraktions-Index) Detektors, analysiert. Das so erhaltene Eluogramm (Signalintensität gegen Elutionsvolumen) kann mit Hilfe von Standards bekannter und enger Molmassenverteilung (im Speziellen mit Pullulanstandards) kalibriert werden. Wird zusätzlich zu dem Konzentrationsdetektor ebenfalls noch ein Molmassensensitiver Detektor (wie z.B. ein Multi Angle Laser Light Scattering oder MALLS Detektor) verwendet, kann die Molmasse aus den Signalen der beiden Detektoren direkt bestimmt werden. Da sich die erfindungsgemäß enzymatisch verzweigten Stärkederivate im Elutionsverhalten stark von linearen Molekülen, welche als Standards Verwendung finden, unterscheiden, ist die Auswertung der Molmassenbestimmung durch das Lichtstreuverhalten bevorzugt.

Sofern als Referenz die konventionelle SEC mit Pullulanstandards herangezogen werden soll, ist in vorzugsweisen Ausführungsformen die mittlere Molmasse Mn der erfindungsgemäßen Stärken größer gleich 10 kDa, größer gleich 11 kDa, größer gleich 12 kDa, größer gleich 13 kDa, größer gleich 14 kDa. Gemäß diesen Ausführungsformen ist die mittlere Molmasse vorzugsweise kleiner gleich 50 kDa, kleiner gleich 40 kDa, kleiner gleich 30 kDa, kleiner gleich 20 kDa, ermittelt durch konventionelle SEC mit Pullulankalibration.

Neben dem Zahlenmittel der Molmasse (Mn) ist auch das Gewichtsmittel (Mw) charakteristisch für eine Stärkezusammensetzung. Das Gewichtsmittel ist größer als das Zahlmittel aufgrund der stärkeren Gewichtung der höher molekularen Stärkemoleküle. In bevorzugten Ausführungsformen ist die mittlere Molmasse Mw (Gewichtsmittel) der Stärke, gemessen durch Lichtstreuung, von 60 kDa bis 3000 kDa, insbesondere bevorzugt ist, dass die mittlere Molmasse Mw mindestens 70 kDa, insbesondere bevorzugt mindestens 80 kDa, mindestens 90 kDa, mindestens 100 kDa, mindestens 105 kDa, mindestens 110 kDa, mindestens 115 kDa, mindestens 120 kDa, mindestens 125 kDa, mindestens 130 kDa, beträgt. Weiters bevorzugt ist, dass das mittlere Molekulargewicht Mw der Stärke, gemessen durch Lichtstreuung, kleiner gleich 3000 kDa, kleiner gleich 2900 kDa, kleiner gleich 2800 kDa, kleiner gleich 2700 kDa, kleiner gleich 2600 kDa, kleiner gleich 2500 kDa, kleiner gleich 2400 kDa, kleiner gleich 2300 kDa, kleiner gleich 2200 kDa, kleiner gleich 2100 kDa, kleiner gleich 2000 kDa, kleiner gleich 1900 kDa, kleiner gleich 1800 kDa, kleiner gleich 1700 kDa, kleiner gleich 1600 kDa, kleiner gleich 1500 kDa, kleiner gleich 1400 kDa, kleiner gleich 1300 kDa, kleiner gleich 1200 kDa, kleiner gleich 1100 kDa, kleiner gleich 1000 kDa, kleiner gleich 900 kDa, kleiner gleich 800 kDa, kleiner gleich 700 kDa, kleiner gleich 600 kDa, kleiner gleich 500 kDa, kleiner gleich 400 kDa, kleiner gleich 300 kDa, kleiner gleich 200 kDa, kleiner gleich 170 kDa, kleiner gleich 150 kDa, kleiner gleich 140 kDa, kleiner gleich 135 kDa, kleiner gleich kDa, kleiner gleich 125 kDa, kleiner gleich 120 kDa, kleiner gleich 115 kDa kleiner gleich 110 kDa, ist.

Eine weitere Kenngröße der erfindungsgemäßen enzymatisch modifizierten Stärke ist der Polydispersitätsindex, PDI, welcher durch das Verhältnis Mw/Mn bestimmt wird. Die Polydispersität entspricht der Breite der Verteilung des Molmassenprofils einer heterogenen, also nicht einheitlichen, Stärke. Jedoch kann festgehalten werden, dass relativ zu anderen Stärken, insbesondere zu Ausgangsstärken, die erfindungsgemäß modifizierte Stärke hoch homogen ist. Der Polydispersitätsindex PDI der erfindungsgemäßen Produkte ist üblicherweise zwischen 1 und 5. In speziell bevorzugten Ausführungsformen ist der Polydispersitätsindex kleiner als 4, kleiner als 3,5, kleiner als 3, kleiner als 2,5, kleiner als 2,25, kleiner als 2, kleiner als 1,9, kleiner als 1,8, kleiner als 1,7, kleiner als 1,6, kleiner als 1,5, kleiner als 1,4, wobei hierbei die Molmassen Mw und Mn ermittelt durch Lichtstreuung herangezogen werden. Ähnliche aber leicht höhere Polydispersitätsindizes können bei der Molmassenbestimmung durch konventionelle SEC erhalten werden. Hierbei sind vorzugsweise die Polydispersitätsindizes vorzugsweise kleiner als 5, kleiner als 4,5, kleiner als 4, kleiner als 3,75, kleiner als 3,5, kleiner als 3,25, kleiner als 3, kleiner als 2,75, kleiner als 2,5, kleiner als 2,25, kleiner als 2. Vorzugsweise weist das Molmassenprofil, z.B. nach Größenausschlusschromatographie, nur einen einzigen Peak mit einer monomodalen Molmassenverteilung auf, insbesondere bevorzugt wie in den Figuren dargestellt. In bevorzugten Ausführungsformen sind mindestens 50% (Gewichts-%) der Stärke, vorzugsweise mindestens 60%, mindestens 70%, mindestens 80% oder mindestens 90%, diesem Peak zuzuordnen.

Die erfindungsgemäßen modifizierten Stärken, welche sich für die erfindungsgemäßen Klebstoffzusammensetzungen eignen, weisen vorzugsweise keine oder geringe Anteile zyklischer Strukturen auf bzw. sind im Wesentlichen frei von zyklischen Strukturen. In speziellen Ausführungsformen weist die Stärke insbesondere weniger als 8% zyklische Strukturen auf. Als eine zyklische Stärkestruktur werden alle Glucoseeinheiten des Stärkemoleküls verstanden, welche in einer Ringstruktur involviert sind. Seitenketten, verzweigt oder linear, werden nicht als Ringstruktur angesehen, sofern innerhalb dieser Seitenketten kein Ringschluss vorkommt. Demgemäß ist insbesondere der Anteil an Anhydroglukoseeinheiten in zyklischen Rest-Strukturen der Stärke nach Behandlung mit Glukoamylase geringer als 8% der Stärkemasse.

Vorzugsweise unterscheidet sich die erfindungsgemäß modifizierte Stärke in diesem Bereich nicht von herkömmlichen Stärkeprodukten, z.B. Maltodextrinen. Nach Entfernung der Verzweigungen durch z.B. Glukoamylase bilden die erfindungsgemäßen Stärken und herkömmliche Maltodextrine ähnliche Rückstände.

Im Wesentlichen frei von zyklischen Strukturen wird eine erfindungsgemäße enzymatisch modifizierte Stärke angesehen, wenn der Anteil an Glucoseeinheiten zyklischen Strukturen geringer als 8% der Stärkemasse, vorzugsweise geringer als 7,5%, geringer als 6%, geringer als 5,5%, geringer als 5%, geringer als 4,75%, geringer als 4,5%, geringer als 4,25%, geringer als 4%, geringer als 3,75%, geringer als 3,5%, geringer als 3,25%, geringer als 3%, geringer als 2,75%, geringer als 2,5%, geringer als 2,25%, geringer als 2%, geringer als 1,75%, geringer als 1,5%, geringer als 1,25%, geringer als 1%, geringer als 0,75%, geringer als 0,5%, geringer als 0,25%, geringer als 0,1% oder sogar 0%, ist. Bei der Ermittlung des Anteils an Glukoseeinheiten in zyklischen Stärkestrukturen versteht sich, dass nur ein solcher Anteil gewertet werden kann, welcher über dem Blindwert des Messverfahrens liegt. Der Blindwert kann anhand bekannter nichtzyklischer Stärkestrukturen ermittelt werden. Passende Referenzstärken sind daher normalerweise die Ausgangsstärken, welche als Ausgangsstoff für die erfindungsgemäße enzymatische Modifizierung der Stärke mit einem Verzweigungsenzym zur Herstellung der erfindungsgemäßen Stärke dient.

In anderen Ausführungsformen können in der Stärke zyklische Strukturen enthalten sein. Zyklische Strukturen können durch geeignete Enzyme, wie beispielsweise Zyklodextringlucanotransferasen oder dergleichen, eingebracht werden. In bestimmten Ausführungsformen kann die Stärke daher von 0,1% bis 15%, vorzugsweise 0,5% bis 11%, insbesondere bevorzugt 1% bis 8 %, im speziellen bevorzugt 2% bis 5%, zyklische Ringstrukturen enthalten.

Bei stärker verzweigten Stärken mit geringeren Molmassen werden in der Regel höhere Anteile an zyklischen Nebenprodukten toleriert, sodass vorzugsweise bei Stärken mit einer Molmasse von weniger als 60 kDa (mittlere Molmasse Mn), bestimmt durch Lichtstreuung, unabhängig von den oben genannten Gesamtanteilen an Glukoseeinheiten in zyklischen Stärkestrukturen, der Anteil der Glukoseeinheiten in zyklischen Stärkestrukturen, vorzugsweise geringer als 10%, geringer als 9,5%, geringer als 9%, geringer als 8,5%, geringer als 8%, geringer als 7%, geringer als 6%, geringer als 5%, oder geringer also die oben genannten Anteile, ist.

In vorzugsweisen Ausführungsformen ist die Viskosität der Stärke der Zusammensetzung, in einer (rein) wässrigen 40%igen (Gewichts-% in Trockensubstanz) Lösung kleiner als 1 500 mPas, vorzugsweise kleiner als 1 200 mPas, kleiner als 1 000 mPas, kleiner als 800 mPas, kleiner als 600 mPas, kleiner als 500 mPas und/oder mindestens 100 mPas, mindestens 150 mPas, mindestens 200 mPas, mindestens 250 mPas, mindestens 300 mPas. In Form einer 50%igen (Gewichts-%) Lösung der Stärke ist insbesondere bevorzugt die Viskosität mindestens 100 mPas, mindestens 150 mPas, mindestens 200 mPas, mindestens 250 mPas, mindestens 300 mPas und/oder bis zu 8 000 mPas, bis zu 7 900 mPas, bis zu 7 800 mPas, bis zu 7 700 mPas, bis zu 7 600 mPas, bis zu 7 500 mPas, bis zu 7 400 mPas, bis zu 7 300 mPas, bis zu 7 200 mPas, bis zu 7 100 mPas, bis zu 7 000 mPas, bis zu 6 900 mPas, bis zu 6 800 mPas, bis zu 6 700 mPas, bis zu 6 600 mPas, bis zu 6 500 mPas, bis zu 6 400 mPas, bis zu 6 300 mPas, bis zu 6 200 mPas, bis zu 6 100 mPas, bis zu 6 000 mPas, bis zu 5 900 mPas, bis zu 5 800 mPas, bis zu 5 700 mPas, bis zu 5 600 mPas, bis zu 5 500 mPas, bis zu 5 400 mPas, bis zu 5 300 mPas, bis zu 5 200 mPas, bis zu 5 100 mPas, bis zu 5 000 mPas, bis zu 4 900 mPas, bis zu 4 800 mPas, bis zu 4 700 mPas, bis zu 4 600 mPas, bis zu 4 500 mPas, bis zu 4 400 mPas, bis zu 4 300 mPas, bis zu 4 200 mPas, bis zu 4 100 mPas, bis zu 4 000 mPas, bis zu 3 900 mPas, bis zu 3 800 mPas, bis zu 3 700 mPas, bis zu 3 600 mPas, bis zu 3 500 mPas, bis zu 3 400 mPas, bis zu 3 300 mPas, bis zu 3 200 mPas, bis zu 3 100 mPas, bis zu 3 000 mPas. Diese Viskosität stellt sich in bestimmten Ausführungsformen unmittelbar nach dem Auflösen der Stärke, nach 2h oder 24h Lagerung und bei einer Temperatur von 20-25°C der Produktlösung, insbesondere bei 22,5°C, ein. Selbstverständlich kann in der Zusammensetzung die Viskosität aufgrund diverser Additive variieren. Als Materialeigenschaft der Stärke wird daher eine rein wässrige Lösung zur Viskositätsbestimmung der Stärke herangezogen. In besonders bevorzugten Ausführungsformen zeigt auch die Klebstoffzusammensetzung diese Viskositätswerte auf.

Durch den erfindungsgemäßen Einsatz eines Verzweigungsenzyms wird der Verzweigungsgrad der Stärke erhöht. Der Verzweigungsgrad wird mittels NMR-Analyse ermittelt. Eine allgemeine Beschreibung zur Ermittlung von Verzweigungsgraden von Stärkeprodukte bietet Gunilla S. Nilsson, et al. (Starch/Stärke (1996) 48, Nr. 10. S. 352-357).

In bevorzugten Ausführungsformen liegt der Verzweigungsgrad von alpha-1,6-Verzweigungen zwischen 4 und 12%. Insbesondere bevorzugt ist ein Verzweigungsgrad von mindestens 4%, mindestens 4,5%, mindestens 5%, mindestens 5,5%, mindestens 6%, mindestens 6,5%, mindestens 7%, mindestens 7,5%. Insbesondere, wird der Verzweigungsgrad einer Ausgangsstärke durch die erfindungsgemäße Modifizierung erhöht, nämlich vorzugsweise um mindestens 1%, insbesondere bevorzugt mindestens 2%, mindestens 3%, mindestens 4%, mindestens 5%, mindestens 6%. In besonders bevorzugten Ausführungsformen sind alle Verzweigungen ausschließlich alpha-1,6-glykosidische Bindungen.

Die Ausgangsstärke, die Basis für die erfindungsgemäße enzymatische Modifizierung, kann jede herkömmliche Knollen-, Getreide- oder Leguminose-Stärke sein, z.B. Erbsenstärke, Maisstärke, inkl. Wachsmaisstärke, Kartoffelstärke, Amaranthstärke, Reisstärke, inkl. Wachsreisstärke, Weizenstärke, inkl. Wachsweizenstärke, Gerstenstärke, inkl. Wachsgerstenstärke, Tapiokastärke, Sagostärke. Stärken natürlichen Ursprungs haben in der Regel einen Amylosegehalt von 20 % bis 30 %, abhängig von der Pflanzenart, aus der sie gewonnen werden. Es gibt aber auch amylopektinreiche Stärken, welche einen deutlich erhöhten Amylopektingehalt aufweisen, bzw. Produkte, welche einen erhöhten Amylosegehalt enthalten. Neben den natürlichen bzw. den durch Züchtungsmaßnahmen erhaltenen amylopektinreichen Stärketypen und Hochamylosetypen gibt es auch über chemische und/oder physikalische Fraktionierung gewonnene bzw. über gentechnisch veränderte Pflanzen hergestellte amylopektinreiche Stärken, die u.a. durch Unterdrückung der Amyloseproduktion erhalten werden. Bekannt sind amylopektinreiche Getreidestärken auf Basis von Maisstärke (Wachsmaisstärke), Reisstärke, Weizenstärke und Gerstenstärke. Neuerungen auf dem Gebiet der amylopektinreichen Stärken stellen amylopektinreiche Kartoffelstärke und amylopektinreiche Tapiokastärke dar. Insbesondere bevorzugt sind Stärken mit hohem Amylopektingehalt, insbesondere Stärken mit mindestens 80%, insbesondere mindestens 85%, mindestens 88%, mindestens 90%, mindestens 92%, mindestens 94%, mindestens 95%, mindestens 96%, mindestens 97%, mindestens 98%, mindestens 99%, mindestens 99,5% Amylopektin. Amylopektin ist bereits eine verzweigte Stärke und die erfindungsgemäße enzymatische Modifizierung mit einem Verzweigungsenzym kann diese bereits nativ hohe Verzweigung weiter erhöhen. Wachsmaisstärke wird besonders bevorzugt.

Da Stärke naturgemäß heterogen ist, kann auch bei erfindungsgemäß hergestellten enzymatisch verzweigten Stärken für die Klebstoffzusammensetzung neben den Stärkemolekülen im erfindungs-gemäß bevorzugten Bereich mit den oben genannten Eigenschaften auch andere Stärkemoleküle vorkommen. In bevorzugten Ausführungsformen ist der Anteil an enzymatisch modifizierter Stärke, wie oben definiert, mindestens 50% (Gew.-%) der Stärke der Zusammensetzung. Vorzugsweise ist dieser Anteil dieser enzymatisch modifizierten Stärke mindestens 55%, mindestens 60%, mindestens 65%, mindestens 70%, mindestens 75%, mindestens 80%, mindestens 85% der Stärkezusammensetzung.

Die Stärke wird durch ein Verzweigungsenzym modifiziert, wodurch der Verzweigungsgrad im Vergleich zu modifizierter Stärke erhöht wird und/oder die Polydispersität im Vergleich zu unmodifizierter Stärke erniedrigt wird. Insbesondere ist das Verzweigungsenzym eine 1,4-$\alpha$-D-glucan: 1,4-$\alpha$-D-glucan 6-$\alpha$-D-(1,4-$\alpha$-D-glucano)-transferase (E.C. 2.4.1.18). Im Stand der Technik sind diverse Verzweigungsenzyme bekannt, welche in der Lage sind Stärke weiter durch die Umwandlung von $\alpha$1,4-glucosidischen Bindungen zu $\alpha$1,6-Bindungen zu erhöhen. Verzweigungsenzyme sind aus diversen Quellen bekannt, z.B. aus Kartoffel, *Bacillus sp., Streptomyces sp., E.Coli, Pseudomonas sp.,* Hefe wie beispielsweise *Candida, Kluyveromyces, Pichia, Saccharomyces, Schizosaccharomyces oder Yarrowia,* Pilzen wie beispielsweise *Acremonium, Aspergillus, Aureobasidium, Cryptococcus, Filibasidium, Fusarium, Humicola, Magnaporthe, Mucor, Myceliophthora, Neocallimastix, Neurospora, Paecilomyces, Penicillium, Piromyces, Schizophyllum, Talaromyces, Thermoascus, Thielavia, Tolypocladium,* oder *Trichoderma.* Insbesondere bevorzugt ist ein Verzweigungsenzym aus *Rhodothermus sp.,* z.B. *Rhodothermus Obamensis* oder *Rhodothermus Marinus.* Durch Auswahl geeigneter Mengen des Verzweigungsenzyms bzw. der Quelle können die erfindungsgemäß verzweigten Stärken hergestellt werden. Gegebenenfalls könnte die erfindungsgemäße Stärke als Fraktion eines Verzweigungsprodukts nach Behandlung einer Ausgangsstärke mit dem Verzweigungsenzym isoliert werden. Besonders bevorzugt ist die Verwendung eines Verzweigungsenzyms aus *Rhodothermus sp..* Diese Enzyme haben eine spezielle katalytische Eigenschaft und ein spezielles Temperaturoptimum über 60°C, das eine wirtschaftlich realistische Produktion ermöglicht. Ohne auf eine spezielle Theorie limitiert zu sein, wird davon ausgegangen, dass bei einer Reaktion über 60°C auch andere Verzweigungsreaktionen ablaufen, und dass die Stärken, welche mittels eines Verzweigungsenzyms von *Rhodothermus sp*. oder einem anderen thermophilen Organismus mit einem Verzweigungsenzym, welches ein Temperaturoptimum von mindestens 60°C aufweist, auch unterschiedliche Stärkeprodukte erhalten. Diese sind besonders bevorzugt für die vorliegende Erfindung. Insbesondere bevorzugt wird die Verzweigungsreaktion bei einer Temperatur von mindestens 20°C, mindestens 30°C, mindestens 40°C mindestens 50°C, mindestens 55°C, mindestens 60°C, mindestens 65°C, mindestens 70°C, mindestens 75°C, mindestens 80°C vorgenommen. Die Verzweigungsreaktion wird vorzugsweise an Stärke im Gelzustand bzw. verkleisterter Stärke, insbesondere in wässriger Lösung, vorgenommen. Die in einer solchen Reaktion erhältlichen Stärken können in einer erfindungsgemäßen Klebstoffzusammensetzung eingesetzt werden.

Die enzymatische Aktivität von Enzymen wird üblicherweise in enzymatischen Einheiten, E.U oder nur U, angegeben. Für eine Verzweigungsreaktion wird treffenderweise, insbesondere dann wenn das Enzym auch andere Reaktionen katalysieren kann, die Aktivität in "Branching Enzyme Units" - BEU angegeben. Eine Methode zur Messung dieser speziellen Enzymaktivität wurde von Takata et al. beschrieben (Applied and Environmental microbiology (1994),Vol. 60, No. 9, S. 3097). In der Materials and Methods Section wird unter der Überschrift "Branching Enzyme activity" der entsprechende "Assay A" gut erläutert. Der Assay beruht auf der Einwirkung des Verzweigungsenzyms auf eine definierte Amylosetype und der Abnahme der Absorptionsintensität des Amylose-Iod-Komplexes. Vorzugsweise werden Verzweigungsenzyme in ausreichender Menge für eine Aktivität von 50 bis 20 000 BEU pro Gramm der eingesetzten Stärke eingesetzt. Insbesondere bevorzugt sind Aktivitäten von mindestens 80 BEU, mindestens 100 BEU, mindestens 120 BEU, mindestens 200 BEU, mindestens 250 BEU, mindestens 300 BEU, mindestens 400 BEU, mindestens 500 BEU, mindestens 600 BEU, mindestens 700 BEU, mindestens 800 BEU pro Gramm Stärke. In weiteren Ausführungsformen ist die Aktivität bis zu 1500 BEU, bis zu 1800 BEU, bis zu 2000 BEU, bis zu 2500 BEU, bis zu 3000 BEU, bis zu 4000 BEU, bis zu 5000 BEU, bis zu 6000 BEU bis zu 7000 BEU, bis zu 8000 BEU, bis zu 9000 BEU, bis zu 10000 BEU, bis zu 12000 BEU, bis zu 14000 BEU, bis zu 16000 BEU, bis zu 18000 BEU, oder bis zu 20000 BEU pro Gramm Stärke.

Die erfindungsgemäße Stärke der Klebstoffzusammensetzung ist gewöhnlicherweise im Wesentlichen frei von niedermolekularen Oligosacchariden mit einem Polymerisationsgrad von kleiner als 3. Vorzugsweise ist der Anteil der niedermolekularen Oligosaccharide weniger als 5 Gewichts-% der Stärkemasse. In besonders bevorzugten Ausführungsformen kann dieser Anteil an niedermolekularen Oligosacchariden auch weniger als 4%, weniger als 3%, weniger als 2%, weniger als 1%, weniger als 0,5%, weniger als 0,1%, weniger als 0,05%, betragen. Vorzugsweise wird ein Verzweigungsenzym eingesetzt, das diese geringen Anteile an niedermolekularen Oligosacchariden produziert. Alternativ, sofern niedermolekulare Oligosaccharide vorhanden sind, können diese gegebenenfalls abgetrennt werden.

Im Speziellen wurde erfindungsgemäß festgestellt, dass die enzymatisch verzweigte Stärke eine hohe Wasserlöslichkeit aufweist, insbesondere sind mindestens 75% (Gew.-%), in besonderen Ausführungsformen mindestens 85%, speziell bevorzugt mindestens 95%, der Stärke bei 25°C wasserlöslich.

In speziellen Ausführungsformen ist die Stärke - abgesehen von natürlichen Modifizierungen, wie Phosphatveresterung, und der erfindungsgemäßen Modifizierung durch künstliche Verzweigung - nicht weiter modifiziert. Vorzugsweise weist die Stärke Säuregruppen auf, sowohl in protonierter, deprotonierter Form oder in Form eines Salzes. Solche Gruppen können z.B. ausgewählt sein aus Phosphat, Phosphonat, Sulfat, Sulfonat oder Carbonssäuregruppen, insbesondere bevorzugt Phosphat oder Carbonsäuregruppen. Vorzugsweise ist der Anteil an Säuregruppen pro Stärkemolekül zwischen 0,01 bis 4, vorzugsweise 0,05 bis 3 bzw. 0,1 bis 2,5, 0,5 bis 2, 0,75 bis 1,5 oder 0,8 bis 1,25.

In anderen Ausführungsformen kann das erfindungsgemäß enzymatisch modifizierte (verzweigte) Stärkeprodukt physikalisch oder chemisch, insbesondere durch Substitution von Hydroxylgruppen der Anhydroglukoseeinheiten, modifizert sein. Ebenso sind weitere enzymatische Modifizierungen möglich, auch durch andere Enzyme als den erfindungsgemäßen Verzweigungsenzymen, wie z.B. die Modifizierung durch Amylasen. Die zusätzliche enzymatische, physikalische oder chemische Modifizierung kann vor, während oder nach der erfindungsgemäßen verzweigenden enzymatischen Modifizierung erfolgen. Unter chemischer Modifizierung werden beispielsweise Vernetzung, Veretherung und Veresterung verstanden. Auch andere chemische Modifizierungsformen sollen nicht ausgeschlossen werden. Kombinationen der genannten Modifizierungen sind ebenfalls Teil der Erfindung.

Eine Vernetzung erfolgt vorzugsweise durch Umsetzung mit Epi-chlorhydrin, di- oder polyfunktionellen Glycidylethern bzw. -estern (Butandioldiglycidether, Polyglyceroltriglycidether, Cyclohexandimethanoldiglycidether, Glycerintriglycidether, Neopentyl-glycoldiglycidether, Pentaerythrittetraglycidether, Trimethylol-propantriglycidether, Perhydrobisphenoldiglycid-ether), Phosphoroxychlorid oder Trimetaphosphatsalzen (Natriumtrimetaphosphat). Weiters kann die Vernetzung beispielsweise mit Adipinsäure, Polyphosphaten, 1,3-Dichlor-2-propanol, gegebenenfalls im Gemisch mit (Poly-)Aminen, weiters mit Di- oder Polyepoxiden, zwei- oder mehrwertigen Isocyanaten, linearen Dicarboxylsäureanhydriden, Adipinsäure, Dichloressigsäure, Divinylsulfonen, Zitronensäureacrolein, Acroleinpolyphosphat z.B. Hexametaphosphat, Biphenylen, N,N,-Dimethylol-Imidzolidon-2 (DMEU), über eine Acetalvernetzung z.B. mit Formaldehyd, Dimethylolethylen-Harnstoff Aldehyden oder aldehydfreisetzenden Reagenzien, wie beispielsweise N,N'-Dimethylol-N,N'-ethylenharnstoff und gemischten Anhydriden von Carbonsäuren mit di- oder tribasischen Säuren, wie beispielsweise ein gemischtes Anhydrid aus Acetanhydrid mit Adipinsäure, erfolgen. Letzteres bzw. zahlreiche Varianten davon können unter dem Begriff Vernetzung mit Adipinsäure zusammengefasst werden. Als Vernetzungsreagenzien kommen auch noch weitere dem Fachmann bekannte Vernetzer in Frage, die angegebenen Reagenzien stellen nur eine Auswahl an möglichen Chemikalien dar.

Die enzymatisch modifizierten Stärkeprodukte können durch Vernetzung bei einem molaren Verhältnis von Vernetzungsreagens (V) zu Anhydroglucoseeinheit (AGU) von mindestens 0,000001 bis 1,0 erhältlich vor- oder nachbehandelt sein. 1 Kilogramm Stärke enthält ca. 6,2 Mol Anhydroglucoseeinheiten.

Weitere chemische Modifikationen sind z.B. Veretherungen oder Veresterungen. Sofern nichts anders Lautendes unten definiert ist, umfassen die Substituenten organische Reste mit bis zu 20, vorzugsweise bis zu 15, insbesondere bis zu 10, im Speziellen bis zu 6, Kohlenstoffatomen. Im Folgenden werden einige Derivatisierungen beschrieben, die alleine oder in Kombination miteinander zur weiteren Derivatisierung der Stärkederivate vorgesehen werden können. Die Art der Derivatisierung und die Rohstoffbasis der verwendeten Stärke (z.B. amylopektinreiche Kartoffel- oder amylopektinreiche Maisstärke) hängen sehr eng mit dem speziellen Einsatzbereich des jeweiligen Produktes zusammen. Die Methoden hiezu sind an sich bekannt. Im Speziellen sollen hier die Modifikation im Slurry und im Kleister genannt werden, auch Trockenderivatisierungen und Modifikation über Extrusionsverfahren sind möglich.

Aus der Literatur ist eine Vielzahl von Derivaten bekannt, deren Herstellung u.a. in dem Werk "Starch: Chemistry and Technology", R.L. Whistler, Kapitel X und XVII, 1984, und in "Modified Starches: Properties and Uses", herausgegeben von O.B. Wurzburg, Kapitel 2-6, und 9-11, CRC Press, 1986, gut zusammengefasst ist. Im Allgemeinen unterscheidet man bei Stärkederivaten zwischen Stärkeether und Stärkeester. Des Weiteren kann zwischen nichtionischen, anionischen, kationischen und amphoteren als auch hydrophoben Stärkederivaten differenziert werden, welche sowohl über eine Slurry-, Kleister-, Halbtrocken- oder Trockenderivatisierung als auch über eine Derivatisierung in organischen Lösungsmitteln hergestellt werden können.

Unter anionischer und nichtionischer Modifizierung der Stärke werden jene Derivate zusammengefasst, bei denen die freien Hydroxylgruppen der Stärke durch anionische oder nichtinonische Gruppierungen substituiert werden.

Die anionische und nichtionische Derivatisierung lässt sich prinzipiell auf zwei Arten durchführen:

a) Die Modifizierung erfolgt dermaßen, dass es zu einer Veresterung der Stärke kommt. Als Modifizierungsmittel dienen anorganische oder organische verschiedenwertige, meist zweiwertige, Säuren bzw. Salze davon bzw. Ester davon bzw. Anhydride davon. So sind u.a. folgende Säuren (ihre Aufzählung ist nur beispielhaft) geeignet: o-Phosphorsäure, m-Phosphorsäure, Poly-Phosphorsäure, unterschiedlichste Schwefelsäuren, verschiedenste Kieselsäuren, die unterschiedlichsten Borsäuren, Essigsäure, Oxalsäure, Bernsteinsäure und ihre Derivate, Glutarsäure, Adipinsäure, Phthalsäure, Citronensäure, etc.. Auch gemischte Ester oder Anhydride können verwendet werden. Bei der Veresterung der Stärke kann diese auch mehrfach erfolgen, so dass beispielsweise Distärkephosphorsäureester hergestellt werden können. Vorzugsweise ist die erfindungsgemäß eingesetzte Stärke dabei das Produkt einer Veresterung mit Mono-, Di- oder Tricarbonsäuren mit einer Alkylkette mit 1 bis 30 Kohlenstoffatomen oder ein Carbamat, besonders bevorzugt acyliert, wie succinyliert, octenylsuccinyliert, dodecylsuccinyliert oder acetyliert.

b) Die Modifizierung erfolgt dermaßen, dass es zu einer Veretherung der Stärke kommt. Besonders bevorzugt wird dabei, wenn die erfindungsgemäß eingesetzte Stärke eine Methyl-, Ethyl-, Hydroxyethyl-, Hydroxypropyl-, Hydroxybutyl-, Carboxymethyl-, Cyanoethyl-, Carbamoylethyl-etherstärke oder ein Gemisch derselben ist.

Die Stärke ist dadurch beispielsweise primär, oder zusätzlich mit Phosphat, Phosphonat, Sulfat, Sulfonat oder Carboxylgruppen substituiert. Dies wird beispielsweise durch Umsetzung der Stärke mit Halogencarbonsäuren, Chlorhydroxyalkylsulfonaten oder Chlorhydroxyalkylphosphonaten erreicht.

Unter kationischer Modifizierung der Stärken werden jene Derivate zusammengefasst, wo durch Substitution eine positive Ladung in die Stärke eingebracht wird. Die Kationisierungsverfahren erfolgen mit Amino-, Imino-, Ammonium-, Sulfonium- oder Phosphoniumgruppen. Methoden zur Herstellung von kationisierten Stärken sind beispielsweise von D.B. Solareck: Cationic Starches, in dem Buch von O.B. Wurzburg (Hrsg.): Modified Starches: Properties and Uses, CRC Press Inc., Boca Raton, Florida (1986), S. 113 - 130, beschrieben. Solche kationischen Derivate enthalten bevorzugt stickstoffhaltige Gruppen, insbesondere primäre, sekundäre, tertiäre und quartäre Amine bzw. Sulfonium- und Phosphoniumgruppen, die über Ether- oder Esterbindungen gebunden sind. Bevorzugt ist der Einsatz von kationisierten Stärken, die tertiäre und elektropositiv geladene quaternäre Ammoniumgruppen enthalten.

Eine weitere Gruppe stellen die amphoteren Stärken dar. Diese enthalten sowohl anionische als auch kationische Gruppen, wodurch ihre Anwendungsmöglichkeiten sehr spezifisch sind. Meist handelt es sich um kationische Stärken, die entweder durch Phosphatgruppen oder durch Xanthate zusätzlich modifiziert werden. Eine Darstellung zur Herstellung solcher Produkte ist ebenfalls von D.B. Solareck: Cationic Starches, in dem Buch von O.B. Wurzburg (Hrsg.): Modified Starches: Properties and Uses, CRC Press Inc., Boca Raton, Florida (1986), S. 113-130, beschrieben.

Bei den Estern unterscheidet man zwischen einfachen Stärkeestern und gemischten Stärkeestern, wobei der (die) Substituent(en) des Esters verschiedenartig sein kann (können): im Esterrest RCOO- kann der Rest R ein Alkyl-, Aryl-, Alkenyl-, Alkaryl- oder Aralkylrest mit 1 bis 20 Kohlenstoffatomen, vorzugsweise 1 bis 17 Kohlenstoffatomen, bevorzugt mit 1 bis 6 Kohlenstoffatomen, sein. Diese Produkte schließen die Derivate Acetat (hergestellt aus Vinylacetat oder Acetanhydrid), Propionat, Butyrat, Stearat, Phthalat, Succinat, Oleat, Maleinat, Fumarat und Benzoat ein.

Veretherungen erfolgen großteils durch Umsetzung mit Alkylenoxiden (Hydroxyalkylierung), die 1 bis 20 Kohlenstoffatome, vorzugsweise 2 bis 6 Kohlenstoffatome, insbesondere 2 bis 4 Kohlenstoffatome, enthalten, insbesondere durch Verwendung von Ethylen- und Propylenoxid. Es können aber auch Methyl-, Carboxymethyl-, Cyanethyl- und Carbamoylether hergestellt und verwendet werden. Als Beispiel für eine Carboxyalkylierung sei die Reaktion von Stärke mit Monochloressigsäure oder deren Salzen angeführt. Weiters seien speziell noch hydrophobierende Veretherungsreagenzien, wie Glycidylether oder Epoxide, genannt. Die Alkylkettenlänge der genannten Reagenzien liegt zwischen 1-20 Kohlenstoffatomen, darüber hinaus sind auch noch aromatische Glycidylether möglich.

Als Beispiel für eine Derivatisierung mit Glycidylethern seien o-Kresol-glycidether, Polypropylendi-glykolglycidether, tert-Butylphenylglycidether, Ethylhexyl-glycidether, Hexandiolglycidether und Neodekansäure-glycidester genannt.

Eine weitere Möglichkeit der Alkylierung besteht in der Alkylierung über Alkylhalogenide, beispielsweise über Methylchlorid, Dialkylcarbonate, z.B. Dimethylcarbonat (DMC) oder Dialkylsulfat z.B. Dimethylsulfat.

Der Substituierungsgrad MS (molare Substitution: mol Substituent/mol Glukose-Einheit) ist vorzugsweise mindestens 0,0001, 0,001, 0,01, 0,02, 0,03, 0,04, oder mindestens 0,05, 0,06, 0,07, 0,08, oder 0,09, am meisten bevorzugt mindestens 0,1, und bis zu 3,0, 2,0, 1,0, 0,8, 0,75, 0,7 oder bis zu 0,6. Der Substitutionsgrad DS (degree of substitution: mol Substituent (direkt an Glukose-Einheit gebunden)/mol Glukose-Einheit) liegt vorzugsweise zwischen 0,001 und 3,0, bevorzugt zwischen 0,05 und 0,5.

Neben den Ethern und/oder Estern bzw. zusätzlich zu dieser Derivatisierung kann die erfindungsgemäß verwendete vernetzte Stärke auch in unterschiedlichem Ausmaß oxidiert, thermochemisch abgebaut, dextriniert oder extrudiert sein.

Die für die Veresterungen, Veretherungen und Vernetzungen verwendeten und auch die chemisch nicht-modifizierten Stärken können zudem über thermisch-physikalische Modifikationen getempert (im Slurry) oder inhibiert (Trocken- bzw. Halbtrockenreaktion) sein.

Stärken können auch über Hydrophobierungsreagenzien modifiziert werden. Veretherte hydrophobe Stärken erhält man dabei, wenn die hydrophoben Reagenzien als funktionelle Gruppe ein Halogenid, ein Epoxid, ein Glycidyl, ein Halogenhydrin, eine Carbonsäure oder eine quaternäre Ammoniumgruppe enthalten. Für veresterte hydrophobe Stärken enthält das hydrophobe Reagens zumeist ein Anhydrid. Die angeführten Reaktionen können dabei auch unter Anwesenheit eines Tensides ablaufen. Eine Hydrophobierung der Stärke kann auch über eine Abmischung einer Stärke oder eines Stärkederivates mit Fettsäureester erfolgen. Erfindungsgemäß ist das Stärkederivat hydrophobiert, insbesondere mit einem Derivatisierungsgrad der Hydrophobierung wie oben zur Substituierung angegeben, vorzugsweise zwischen MS von 0,01 bis 0,1. All die genannten Modifikationen der Stärke können nicht nur durch Umsetzung nativer Stärke erzielt werden, auch abgebaute Formen können zum Einsatz kommen. Die Abbauvorgänge können auf mechanische, thermische, thermochemische oder enzymatische Weise erfolgen. Dadurch lässt sich die Stärke nicht nur strukturell verändern, die Stärkeprodukte können auch kaltwasserlöslich bzw. kaltwasserquellbar gemacht werden (z.B. Dextrinierung und Extrusion).

Schließlich kann die Stärke auch als Pfropf-Polymer oder als Pfropf-Copolymer vorliegen, wie beispielsweise mit Produkten aus der Gruppe der Polyvinylalkohole, Acrylamide oder Monomere bzw. Polymere ausgehend von Kohlenwasserstoffen. Dabei kann das Starke-Pfropf-(Co)-Polymerisat bevorzugt als Emulsionspolymerisat vorliegen.

Ein besonderer Vorteil der erfindungsgemäßen Klebstoffzusammensetzung ist, dass die Zusammensetzung stabil in flüssiger bzw. wässriger Form vorliegen kann. Insbesondere weist die Klebstoffzusammensetzung eine Langzeitstabilität nach Auflösung in Wasser von mindestens 5 Tagen, mindestens 10, mindestens 15 mindestens 20 Tagen oder mindestens 1 Monat, mindestens 2 Monaten, mindestens 3 Monaten, mindestens 4 Monaten, mindestens 5 Monaten, mindestens 6 Monaten, mindestens 7 Monaten, mindestens 8 Monaten ohne Retrogradation auf. Retrogradation kann beispielsweise durch den Anstieg der Viskosität bis hin zur Bildung eines festen Gels festgestellt werden. Die Langzeitstabilität kann beispielsweise über den Viskositätsstabilitätsindex SI parametrisiert werden, welcher das Nachdickverhalten über einen bestimmten Zeitraum in Form des Quotienten der Viskosität nach z.B. 14 Tagen - oder den oben angeführten Zeiträumen - und der Viskosität nach Herstellung der Zusammensetzung (meist 2h nachher zur Temperierung bei 22,5°C) ausdrückt.

Nach insbesonders bevorzugten Ausführungsformen betrifft die vorliegende Erfindung eine Klebstoffzusammensetzung, worin die Stärke einen Viskositätsstabilitätsindex SI von kleiner oder gleich 1,3, vorzugsweise von kleiner gleich 1,2, im Speziellen bevorzugt von kleiner gleich 1,2, insbesondere bestimmt durch den Quotient der Viskosität nach 14 Tagen durch die Viskosität nach 2 Stunden nach Herstellung der Zusammensetzung, aufweist.

Ein Parameter zur Beurteilung der Stabilität ist der Viskositätsstabilitätsindex oder kurz Stabilitätsindex (SI-Wert), welcher als Maß für das Nachdickverhalten herangezogen werden kann. Dieser Wert soll in einer stabilen Zusammensetzung möglichst gering sein. Der hierin verwendete SI-Wert ist der Quotient aus der Viskosität (z.B. einer 40% oder 50% Lösung der erfindungsgemäßen Stärke in Wasser) nach 14 Tagen und 2 h. Werte um 1 zeigen eine gute Viskositätsstabilität an, je höher der Wert, desto stärker das Nachdicken. Vorzugsweise weist eine erfindungsgemäße Stärke nach in 50%iger (Gew.-%) Lösung in Wasser einen ND-Wert von kleiner als 3, vorzugsweise kleiner als 2, kleiner als 1,8, kleiner als 1,7, kleiner als 1,6, kleiner als 1,5, kleiner als 1,4, kleiner als 1,3, kleiner als 1,2, oder kleiner als 1,1, auf. In weiteren vorzugsweisen Ausführungsformen der erfindungsgemäßen Stärke sind diese niedrigen SI-Werte alternativ oder zusätzlich in 40%iger (Gew.-%) Lösung gegeben, insbesondere bei Stärken mit einem höheren Molekulargewicht, wie beispielsweise ab 150 kDa oder auch ab 200 kDa Gewichtsmittel Mw, gemessen durch Lichtstreuung. Im speziellen wird die Viskosität unmittelbar nach dem Auflösen der Stärke, nach 2h oder 24h Lagerung und bei einer Temperatur von 20-25°C der Produktlösung, insbesondere bei 22,5°C, bestimmt. Selbstverständlich kann in der Zusammensetzung die Viskositätsstabilität aufgrund diverser Additive variieren. Als Materialeigenschaft der Stärke wird daher eine rein wässrige Lösung zur Viskositätsbestimmung der Stärke herangezogen. In besonders bevorzugten Ausführungsformen zeigt auch die Klebstoffzusammensetzung bzw. deren gesamte Stärkefraktion diese Viskositätsstabilitätswerte auf.

In einem weiteren Aspekt betrifft die vorliegende Erfindung eine Klebstoffzusammensetzung auf Stärkebasis umfassend eine enzymatisch verzweigte Stärke erhältlich durch Kontaktieren einer Ausgangsstärke mit einem Verzweigungsenzym, vorzugsweise aus *Rhodothermus sp.,* insbesondere *Rhodothermus Obamensis* oder *Rhodothermus Marinus,* mit einer Aktivität von 50 BEU bis 20 000 BEU, vorzugsweise von 80 BEU bis 10 000 BEU, speziell bevorzugt 100 bis 5 000 BEU, am meisten bevorzugt 250 bis 2 500 BEU, oder von 275 BEU bis 1800 BEU pro Gramm der Ausgangsstärke. Alternative Verzweigungsenzyme sind aus den oben genannten Quellen erhältlich. Wie oben bereits dargelegt führte eine Verzweigung mit einem Verzweigungsenzym aus *Rhodothermus sp.* bei den oben genannten Aktivitäten zu speziell bevorzugten Stärken, welche besonders starke Klebekraft aufweisen, niederviskos sind und eine außergewöhnlich hohe Langzeitstabilität in flüssiger oder wässriger Form aufweisen. Stärken dieser Ausführungsform der vorliegenden Erfindung sind vorzugsweise weiters, wie oben bereits allgemein beschrieben, definiert, insbesondere im Hinblick auf die (mittleren) Molmassen Mn und Mw, Polydispersitätsindizes, Ausgangsstärke, DE-Werte sowie der Löslichkeit und dem geringen Anteil der niedermolekularen Oligosaccharide.

In einer weiteren Ausführungsform betrifft die vorliegende Erfindung auch die Verwendung der erfindungsgemäßen Klebstoffzusammensetzung zum Kaschieren oder als Klebstoff, insbesondere als Klebstoff für Papier- oder Kartonprodukte, insbesondere bevorzugt für die Kaschierung eines Displaykartons. Unter Kaschieren versteht man das Verbinden gleicher oder unterschiedlicher Materialien mit geeigneten Kaschiermitteln unter Druck und wenn nötig Temperatur. Setzt man flüssige Klebstoffe (Dispersionen,...) als Kaschiermittel ein, so unterscheidet man zwischen Nass- und Aktivierkaschierung. Bei der Nasskaschierung enthält der Klebstofffilm in der Klebefuge noch wesentliche Anteile von Wasser oder Lösungsmittel. Aktivierungskaschierung bedeutet, dass die trockene Klebeschicht meist durch Wärme klebfähig wird.

"Verwendung als Klebstoff" und "Klebeverfahren" unter Verwendung der erfindungsgemäßen Stärke werden hierin gleichbedeutend behandelt. Es hat sich herausgestellt, dass die erfindungsgemäßen Klebstoffzusammensetzungen basierend auf den enzymatisch modifizierten Stärken eine ausgezeichnete Streichfähigkeit, Langzeitviskosität, Stabilität und Klebkraft aufweisen, wobei überraschender Weise zusätzlich festgestellt wurde, dass Papierprodukte gering bis gar nicht quellen. Dies erlaubt die Anwendung für glatte Papieroberflächen ohne diese zu Verwerfen, eine Voraussetzung zu Verwendung für einen Displaykarton wo eine bedruckte oder bedruckbare Oberfläche frei von Verwerfungen beim Kleben oder Trocknen geschützt werden muss.

In weiteren Ausführungsformen ist der Klebstoff als Zigarettenkleber, wasseraktivierbarer Klebers, insbesondere für Etiketten oder Briefmarken, Kleber für die Rundumverklebung bzw. Überlappungsverklebung, als Tapetenkleber, Plakatkleber, Buchbinderkleber, Wellpappenkleber, Etikettenkleber, Sackkleber, Hülsenkleber, Hot-melt (Schmelzklebstoffe) für bspw. Kartonverschluss, für die Papiertüten und Papierbeutelverklebung, für die Produktion von Faltschachteln, als Kleber für die Papier- und Kartonkaschierung, als Kleber für Hygieneartikel, z.B. für Toilettenpapier und oder -rollen oder Taschentücher, oder als Kleber für Medizinprodukte, z.B. medizinische Papier-, Zellulose- oder Textilprodukte wie Wundverbände, als Kleber für Textilien aus gewebten und ungewebten Fasern, Kunststoffe und Folien, Glas, Holz und Holzverbundstoffe, Keramik, Metall, etc., vorgesehen. In speziellen Ausführungsformen wird die erfindungsgemäße Klebstoffzusammensetzung als Kleber für Keramik oder Keramikpartikel vorgesehen, insbesondere zur Herstellung von Schleifpapier.

In einem weiteren Aspekt betrifft die Erfindung ein verklebtes Produkt umfassend eine Klebstoffzusammensetzung als Haftvermittler. Ein solches Produkt kann beispielsweise ein Papier- oder Kartonprodukt, mit mindestens einer Schicht vorzugsweise zwei Schichten, umfassend oder aus Papier oder Karton, sein, es kann aber auch aus einer beliebigen Kombination folgender Substrate zusammengesetzt sein: Textilien aus gewebten und ungewebten Fasern, Kunststoffe und Folien, Glas, Holz und Holzverbundstoffe, Keramik, Metall, etc.. Das verklebte Produkt umfasst üblicherweise zwei Seiten, die miteinander verklebt worden sind, sowie eine oder zwei Schichten aus Papier oder Karton, verbunden durch den erfindungsgemäßen Klebstoff, insbesondere wobei eine Schicht eine bedruckte oder bedruckbare glatte Oberfläche aufweist, insbesondere auf einer zur verklebenden Seite gegenüberliegenden Seite der Schicht. Sinnvollerweise wird die Displayoberfläche selbst nicht verklebt.

In einem weiteren Aspekt betrifft die Erfindung ein Verfahren zum Verkleben (Klebeverfahren) eines Produkts umfassend das Aufbringen der Klebstoffzusammensetzung gemäß der vorliegenden Erfindung auf einer zu verklebenden Seite des Produkts. Dies kann durch einen Rollenauftrag, Düsenauftrag, Sprühauftrag, Schaumauftrag, über Auftragsrasterwalzen, durch ein Tauchverfahren, durch Rakeln etc. erfolgen. Eine weitere zu verklebende Seite wird dann auf den aufgebrachten Klebstoff zur festen Bindung (nach Aushärtung des Klebstoffs bzw. Trocknen) angebracht.

In einem weiteren Aspekt betrifft die vorliegende Erfindung ein Verfahren zur Herstellung der Stärke einer Klebstoffzusammensetzung wie oben beschrieben durch enzymatische Modifizierung umfassend Kontaktieren einer Ausgangsstärke mit einem Verzweigungsenzym, vorzugsweise aus *Rhodothermus sp.,* in einer Menge mit einer Aktivität von 50 BEU bis 20 000 BEU, vorzugsweise wie oben beschrieben wie z.B. mindesten 80 BEU bis 10 000 BEU oder 90 BEU bis 5 000 BEU, pro Gramm der Ausgangsstärke. Die Herstellung ist sowohl mit kontinuierlichen als auch mit batchweisen Verfahren möglich.

In einem zusätzlichen Aspekt betrifft die Erfindung auch ein Verfahren zur enzymatischen Modifizierung von Stärke, dadurch gekennzeichnet, dass die Stärke mit einem Verzweigungsenzym, vorzugsweise aus *Rhodothermus sp.,* kontaktiert wird und dass die mittlere Molmasse des gewünschten modifizierten Stärkeprodukts durch die Anfangsmenge Enzym pro Ausgangsstärke (Gewichtsmenge) gesteuert wird. Es hat sich erfindungsgemäß völlig überraschend herausgestellt, dass durch die Einsatzmenge des Verzweigungsenzyms unterschiedlichste Stärkeprodukte erhalten werden können. So wird beispielsweise durch eine hohe Anfangsmenge an Verzweigungsenzym ein stark verzweigtes Stärkeprodukt mit relativ geringerer Molmasse erhalten. Bei Einsatz geringer Mengen an Verzweigungsenzym werden höher molekulare Stärkeprodukte erhalten Die erhaltenen Stärken, je nach Steuerung durch die Anfangsmenge Enzym pro Ausgangsstärke, haben eigene Charakteristika. Vorzugsweise sind die Bereiche, in denen ein Verzweigungsenzym erfindungsgemäß eingesetzt wird zwischen 50 BEU (niedrige Aktivität) und 20 000 BEU (hohe Aktivität). Selbstverständlich sind auch noch niedrigere oder höhere Aktivitäten möglich, jedoch wurde herausgefunden, dass die besonders vorteilhaften Eigenschaften, nämlich die hohe Langzeitstabilität, niedrige Viskosität sowie außergewöhnlich hohe Klebkraft im Bereich von 50 BEU und 20 000 BEU erzielbar sind. Je nach gewünschter Molmasse des produzierten Stärkeprodukts kann die Anfangsmenge Enzym pro Ausgangsstärke (Gewichtsmenge) gewählt werden.

Die erfindungsgemäßen Klebstoffzusammensetzungen können des weiteren übliche Zusatz- oder Füllstoffe, Additive, Salze, Pufferkomponenten oder Biozide aufweisen. Solche Additive oder Füllstoffe können insbesondere zur Feinjustierung der Viskosität, des Feststoffgehalts, der Stabilität, der Klebefestigkeit, der Rheologie, der Trocknungsrate, der Flexibilität, Wasser- und Pilzresistenz eingesetzt werden.

a) Füllstoffe: Kaolin, Silikate, Calciumcarbonat, Kreide, Talkum, Magnesiumcarbonat, Microsilica, Fasern,..
b) Rheologie modifizierende Additive: beeinflussen die Scherverdünnung bzw. Scherverdickung: anorganische Kolloide, Peptiser, Silikate, Harnstoff, Xanthan, Kasein, Alginat, Celluloseether, Carrageen, Guar, Hydrokolloide, Wasserglas,

c) Dispergiermittel: Polyacrylate, hydrophobierte Polyacrylate...

d) Konservierungsmittel (Fungizide, Biozide, Bakterozide): BIT, MIT, CIT, Sorbate,...

e) Schaum bildende Additive: insbesondere für die Verklebung mittels Schaumauftragsverfahren: Oberflächenaktive Produkte ("Surfactants"): anionisch, kationisch, nicht-ionisch, amphoter, wie bspw. Alykylsulfonate, modifizierte quartärnere Ammoniumsalze, Ethoxylate,...

f) Feuchtigkeit regulierende Produkte bzw. Weichmacher: Natriumnitrat, Harnstoff, Zucker, Zuckeralkohole, Glukose, Sorbitol, mehrwertige Alkohole (Glykole,...), Calciumchlorid, Zinkchlorid

g) Farbstoffe, Pigmente: Titandioxid,...

h) Anti statische Zusatzmittel

i) Tackifier: Acrylat, Dextrin, Harze,

j) Vernetzer: Borsäure (Borax), Zirkoniumsalze...

k) Nassfestmittel, Tenside

l) Polyvinylacetat, Polyvinylalkohol, Dispersionspulver,..

m) Weiters: Wasserglas, Wachse, Salze, Antioxodantien, Aromastoffe Entschäumer und andere Additive, welche hier typischer Weise eingesetzt werden.

Ebenso kann die erfindungsgemäße Stärke als Zusatz oder Additiv in herkömmlichen Klebern dienen, insbesondere in Klebern auf Wasserbasis bzw. in Klebern umfassend ein wässriges Lösungsmittel. Ein Spezielles Beispiel sind hierfür Kleber auf Wasserglas-Basis. Die erfindungsgemäße Stärke kann hierbei als zusätzliche Klebestoffkomponente wirken um die Klebkraft herkömmlicher Kleber zusätzlich zu erhöhen. Auch solche Kleber können die oben genannten Additive oder Füllstoffe enthalten bzw. für die erfindungsgemäßen Zwecke eingesetzt werden.

In einem weiteren Aspekt der vorliegenden Erfindung betrifft die vorliegende Anmeldung ein Verfahren zur Herstellung einer Klebstoffzusammensetzung, umfassend die enzymatische Modifizierung einer Stärke sowie gegebenenfalls das Vermischen mit einem wässrigen Lösungsmittel und optional den oben genannten Füllstoffen, Additiven, Salzen und Pufferkomponenten wie insbesondere Säuren oder Basen zur Einstellung eines gewünschten pH-Werts. Die Zusammensetzung kann flüssig, insbesondere wässrig, oder als Feststoff, z.B. als Pulver, auch als Klebstoffvorprodukt, zur Verfügung gestellt werden. Vorzugsweise ist die Stärke zu 1 bis 80% (Gew.-%) in flüssiger Lösung vorgesehen, insbesondere bevorzugt 10-70%, oder 20-65%, am meisten bevorzugt 25-60%. Klebstoffvorprodukte können durch Anrühren mit Wasser zu fertigen Klebstoffen verarbeitet werden. In einer speziellen Ausführungsform soll die Klebstoffformulierung als Ersatz von synthetischen Klebstoffen auf Basis Polyvinylalkohol und/oder Polyvinylacetat Anwendung finden.

Eine erfindungsgemäße Zusammensetzung zu Anwendung kann gegebenenfalls auch niedrige Stärkemengen ab 1% (Gew.-%) in flüssiger Form Lösung umfassen. Vorzugsweise ist die der Stärkeanteil in der Zusammensetzung mindestens 5%, mindestens 10%, mindestens 15%, mindestens 20%, mindestens 25%, mindestens 30%, mindestens 35%, mindestens 40%, mindestens 45%. In einem weiteren Aspekt betrifft die vorliegende Erfindung konzentrierte langzeitstabile Zusammensetzung (z.B. als konzentrierte Stock-Lösung) von mindestens 40%, mindestens 50%, mindestens 55%, mindestens 60%, mindestens 65%, oder auch mindestens 70%. Diese konzentrierten Lösungen können entweder ebenfalls direkt zum Kleben oder Kaschieren verwendet werden oder zur Anwendung verdünnt werden. Ebenso kann die erfindungsgemäße Stärke bzw. Klebstoffzusammensetzung in fester oder halbfester Form, insbesondere als Klebestift, vorgesehen werden. Auch diese Formen können zur sofortigen Anwendung vorgesehen werden. In Klebestiften können neben der Stärke geringe Mengen Lösungsmittel, insbesondere wässrigen Lösungsmitteln, vorhanden sein, damit eine streichfähige Viskose Zusammensetzung erzielt wird. Klebestifte und auch die Zusammensetzungen der Erfindung im Allgemeinen auf Basis der erfindungsgemäßen Stärke haben neben der hohen Klebekraft auch noch den Vorteil, dass sie toxikologisch unbedenklich sind und auch zur Anwendung durch Kinder geeignet sind.

Die vorliegende Erfindung wird weiters durch die folgenden Figuren und Beispiele näher erläutert, ohne darauf beschränkt zu sein.

**Figuren:**

Fig. 1 zeigt die Elugramme der verschiedener Stärken: erfindungsgemäß vorzugsweise Stärke nach Verzweigung sowie kommerzielle Referenzprodukte (gezeigte Stärken gem. Tabelle 1: MD1, MD2, RD1, EMS1-5);

Fig. 2 zeigt die Molmassenverteilung einiger Stärken gemäß Bestimmung durch Lichtstreuung (gezeigte Stärken: MD1, MD2, RD1, EMS2, EMS3);

Fig. 3 zeigt die Klebkraftmessung 50%iger Stärkelösungen nach 24 Stunden bei unterschiedlichen Schichtdicken (gezeigte Stärken: MD1, MD2, RD1, EMS3; EMS3_1 ist eine zweite nach dem Muster von EMS3 hergestellte Charge);

Fig. 4 zeigt Massenspektren der Stärken nach Glucoamylase-Abbau (gezeigte Stärken: MD1, EMS3, EMS4; EMS4(d) entspricht der EMS4 Stärke, deren Produkt weiter durch Dialyse gereinigt wurde) ;

**Beispiele:**

**Methoden:**

Beispiel 1: Herstellung einer hoch verzweigten Stärke (EMS3)

Materialien:

- Wachsmaisstärke Maisita 21.007
- Branching Enzyme NS28067, (Aktivität von 50.000 BEU/g Lösung)
- Natronlauge
- Salzsäure
- Filterhilfsmittel

100g Wachsmaisstärke (Trockensubstanz) wurden mit destilliertem Wasser zu einem 10%igen Slurry angerührt. Dieser Slurry wurde unter ständigem Rühren (Propellerrührer) verkleistert (95°C). Ab einer Temperatur von ca. 70-75°C begann die Stärke zu verkleistern. Die Temperatur von 95°C wurde 1 Stunde lang gehalten, um einen vollständigen Stärkeaufschluss zu gewährleisten. Nach dem Abkühlen auf 75°C wurde der pH-Wert des Kleisters auf pH 6 (0,1N Salzsäure oder 0,1N Natronlauge) eingestellt. Danach erfolgte die Enzymzugabe (1000 BEU/g Stärke). Um andere Produkte zu erhalten, wurden alternativ 20 BEU/g bis 1 000 000 BEU/g verwendet. Der Zeitpunkt der Enzymzugabe ist als Reaktionsbeginn definiert. Der anfänglich relativ dicke Kleister wurde nach Zugabe des Enzyms allmählich dünnflüssig. Das Reaktionsgemisch wurde konstant auf einer Temperatur von 75°C gehalten und die Reaktion nach 20 Stunden abgebrochen. Dazu wurde mit Salzsäure auf ca. pH 3 gestellt und für 30 min gekocht. Dieses Rohprodukt wurde anschließend durch Filtration gereinigt und getrocknet. Das getrocknete Produkt wurde vermahlen. Aus einem Teil des gereinigten Rohprodukts wurde eine Flüssigstärke hergestellt. Dies erfolgt durch Verdampfen von Wasser bis zum Erreichen der gewünschten Produktkonzentration.

Beispiel 2: Herstellung der Kleister

Destilliertes Wasser (250g) wurde in einem 400 ml Becherglas (hohe Form) vorgelegt und für 40 %: 100 g in Trockensubstanz (i.TS) und für 50 %: 125 g Stärke i.TS eingewogen. Die Einrührung erfolgte mit einem Heidolph-Rührwerk und einem Zahnscheibenrührer (Durchmesser 4 cm). Die Probe wurde rasch, möglichst ohne Klumpenbildung, bei 1000 upm eingestreut und 10 min lang gerührt. Um die biologische Stabilität der hergestellten Leime zu gewährleisten wurden jedem Leim 1% Biozidlösung, bezogen auf die Stärke, beigemengt.

Die ersten Viskositätsmessungen erfolgten direkt nach der Einrührung. Anschließend wurden die Leime zur Aufbewahrung in verschraubbare Gläser gefüllt und bei konstanter Temperatur gelagert.

Beispiel 3: Bestimmung der Viskosität

Der nach oben beschriebener Methode hergestellte Stärkekleister oder eine Flüssigstärke können direkt zur Bestimmung der Viskosität herangezogen werden. Diese wurde mit Hilfe eines Brookfield- RV Viskosimeters (DVII+ Viscosimeter) bei 22,5 °C und einer Umdrehungszahl von 100 UpM mit der Spindel 4 bestimmt.

Die erste Messung findet direkt nach der Herstellung der Kleister statt, weitere Messungen erfolgten nach 2h, 24h, 7 und 14 Tagen, um die Viskositätsstabilität zu beurteilen. Hierfür wurde der Stabilitätsindex-Wert (SI) verwendet, der Quotient aus der Viskosität nach 14 Tagen und 2 h. Werte um 1 zeigen eine gute Viskositätsstabilität an, je höher der Wert, desto stärker das Nachdicken. Verfestigte Proben wurden mit dem SI-Wert größer als 10 angegeben.

Beispiel 4: Bestimmung der Klebkraft

Eine Handrakel wurde mit der gewünschten Schichtdicke (30, 60 bzw. 120 $\mu$m) auf die Außenseite eines Sackpapiers (SE BL 90g/m$^2$) gelegt, mit Kleister (Herstellung siehe oben) befüllt und über das Papier gezogen. Daraufhin wurde ein zweiter Papierstreifen mit der Papierinnenseite darauf gelegt. Das zusammengelegte Papier wurde mit der flachen Hand abgestreift und nochmals auf der Rückseite in gleicher Weise abgestreift. Der verklebte Papierstreifen wurde nun langsam Stück für Stück von Hand auseinander gezogen (leicht ruckartig), bis ein vollständiger Faserriss (über die gesamte Verklebungsbreite) festgestellt wird. Dieser Zeitpunkt stellt die Verklebungsgeschwindigkeit dar und wird in Sekunden angegeben, wobei ein Mittelwert von zumindest 3 Messungen gebildet wurde. Wenn nach 150 sec. noch keine Verklebung festgestellt werden konnte, wurde die Messung abgebrochen.

Beispiel 5: Bestimmung der Molmassenverteilung

Die Bestimmung der Molmassenverteilung erfolgte durch Größenausschlusschromatographie (SEC, UltiMate 3000, Fa. Dionex), bei der die Moleküle nach ihrem hydrodynamischen Volumen über das entsprechende Säulensystem (Suprema 30.000 Å + 1000 Å + 100 Å; 20 $\mu$m Partikelgröße; Fa. PSS Mainz) aufgetrennt werden.

Die Streulichtintensität ist neben der Konzentration und dem Brechungsinkrement dn/dc auch der Molmasse proportional. Somit kann durch die Kombination eines MALLS (Multi Angle Laser Light Scattering, misst die Streulichtintensität bei mehreren Winkeln; SLD7000, Fa PSS Mainz) und eines RI (Refractive Index, bestimmt die Konzentration, RI-101, Fa. Shodex) Detektors die Molmassen (Zahlenmittel Mn und Gewichtsmittel Mw) bei bekanntem dn/dc bestimmt werden. Aus diesen Werten wurde die Polydispersität (Breite der Verteilung, PDI = Mw/Mn) und der durchschnittliche Polymerisationsgrad (DPn = Mn/162) errechnet.

Für die konventionelle SEC wurde das System mittels eines Pullulanstandardsets (180- 788000 g/mol, Polymer Laboratories) kalibriert.

Für den Aufschluss wurde Stärke 2,5%ig in Deionat eingerührt und mit Salzsäure (1N) oder mit NaOH-Lösung (1N) auf einen pH-Wert von pH 7 eingestellt. Diese wässrige Lösung wurde im Verhältnis 1:1,5 mit DMSO verdünnt und unter Rühren 30 min lang bei 100°C aufgeschlossen. Die erhaltene Lösung muss homogen klar sein. Nach dem Abkühlen wurden die Proben über ein Glasfaserfilter filtriert und sind messfertig.

Folgende HPLC Parameter wurden für die Messung verwendet:

| | |
|---|---|
| Eluent: | 0,2 M NaNO$_3$ Lösung (mit 0,2 mg NaN$_3$) |
| Fluss: | 0,7 ml/min |
| Injektionsvolumen: | 80 $\mu$l |
| Säulentemp.: | 70 °C |
| Laufzeit: | 70 min |

Beispiel 6: Bestimmung des Verzweigungsgrades

Zur Bestimmung des Verzweigungsgrades mittels 1H-NMR Spektroskopie wurden die Proben in D2O mit 1% NaOH gelöst und bei 70 °C gemessen. Zur Bestimmung des Verzweigungsgrades wurden die Signale bei 5.6 ppm (1) und 5.3 ppm (2) (Lösungsmittel D2O) benötigt. Die Integration erfolgte über eine vorangegangene Basislinienkorrektur. Das prozentuale Verhältnis wurde wie folgt bestimmt:

```
[Integral (2) * 100] / [intergral (1) + (2)]
```

Die Aufnahmen wurden an einem Bruker ARX 250 durchgeführt (Bruker ARX 250, 250 MHz 1H-NMR, Lösungsmittel D2O, 70°C).

Beispiel 7: Herstellung eines Klebstoffs zur Verklebung von Displaykarton

Rezeptur: Herstellung eines Leims für ein Walzenauftragssystem:

| | |
|---|---|
| 20 kg | 50 %ige Flüssigstärke oder eingerührter Stärkekleister von EMS 3 |
| 10 kg | einer Kaolin-Suspension (FSG = 68 %) |
| 150 g | Biozid (z.B.: Petrozid) |
| 400 g | 2 %ige Natronlauge |

Die Flüssigstärke wurde in einem Behälter vorgelegt, anschließend wurde unter Rühren eine Kaolin-Suspension zugegeben und die Mischung 30min gerührt. Der pH-Wert wurde mit Natronlauge auf 9 gestellt und zwecks Konservierung ein Biozid eingerührt.

Der erhaltene Leim wies folgende Daten auf: Feststoffgehalt: 56%
Brookfield-Viskosität bei 25°C nach 24h: 3650mPas pH-Wert: 9,0
Klebkraft auf Kartonpapier (60μm Handrakel): 24 sec

Der so hergestellte Kaschierleim wies folgende technische Eigenschaften auf:

1. Hervorragende Adhäsion
2. Hohe Klebungsfestigkeit
3. Geringe Spritzneigung
4. Hoher Anfangstack
5. "ready to use" Klebstoffe mit hervorragender Viskositätsstabilität
6. Optimale Verklebung an den Kanten
7. Keine Nachteile beim anschließenden Stanzen
8. Seht gute Scherfestigkeit

In der nachfolgenden Tabelle ist die vergleichende Darstellung der verschiedenen Leime auf Basis unterschiedlicher Rohstoffe dargestellt:

|  | Dispersionsleim | Maltodextrinleim | EMS-Leim |
|---|---|---|---|
| Feststoffgehalt [%] | 55 | 55 | 56 |
| Viskosität [mPas]* | 2300 | Zu dick, geliert | 3650 |
| Klebkraft [s]** | 26 | - | 24 |
| *.... Brookfield-Viskosität bei Raumtemperatur nach 24h **... Klebkraft auf Kartonpapier (60μm Handrakel) | | | |

Beispiel 8: Ermittlung des Glucoamylase-resistenten Anteils durch enzymatischen Abbau mit Glucoamylase

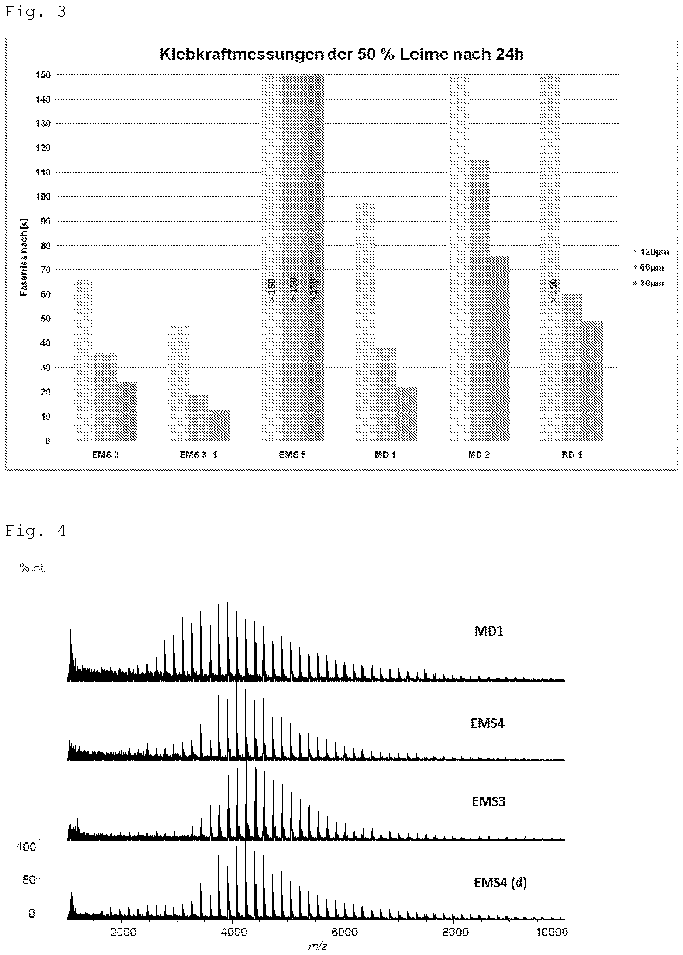

Der Glykoamylase-resistente Anteil wurde wie folgt hergestellt: Glucoamylase wurde eingewogen (Endkonzentration 10 units/ml = 1,3mg /5ml) und in 5ml Wasser (deionat.) aufgenommen. 100mg Stärke wurde zugegeben und die enzymatische Reaktion für 16h bei 40°C (unter Rühren im Aufschlußblock) vorgenommen. Die Reaktion wurde durch Hitzebehandlung für 10min bei 100°C (im Wasserbad) gestoppt. Unlösliche Teile wurden abzentrifugiert (10min, 1500upm), wobei die Flüssigkeit weiterverarbeitet und der Niederschlag verworfen wurde. Eine 10-fache Menge Ethanol abs. wurde zur Flüssigkeit zugegeben. Nach Zentrifugation (30 min, 4000upm) wurde die Flüssigkeit verworfen. Der Niederschlag wurde trocknen gelassen und anschließend in 1 ml Wasser (Deionat) aufgenommen. Glucoamylase wurde erneut zugesetzt (Endkonzentration 50 units/ml). Die zweite Reaktion erfolgte für 1h bei 40°C. Anschließend wurde eine Hitzebehandlung für 10min bei 100°C (im Wasserbad) vorgenommen. Unlösliche Teile wurden abzentrifugiert (10min, 1500upm). Der Niederschlag wurde verworfen und die Flüssigkeit weiterverarbeitet. Die 10-fache Menge Ethanol abs. wurde zur Flüssigkeit zugegeben und nach Zentrifugation (30 min, 4000upm) wurde die Flüssigkeit verworfen. Das Präzipitat wurde gefriergetrocknet. Dieses Endprodukt wurde als Glukoamylaseresistenter Anteil bezeichnet. Ein erfindungsgemäß abgebautes Produkt ("EMS4 (d)") wurde vor der Glukoamylasebehandlung zusätzlich durch Dialyse aufgereinigt. Zum Vergleich mit herkömmlicher Stärke (Maltodextrin mit DE6; ebenfalls Glucoamylase abgebaut) wurde eine Analyse mittels MALDI-TOF (Matrix: Trihydroxyacetophenon) durchgeführt. Die massenspektrometrische Messung wurde an einem Axima TOF2, Shimadzu Biotech Kratos Analytical, Manchester, UK vorgenommen, mit Kalibration mit einfach und doppelt protoniertem bovine insulin (+/- 1 Da). Die Ergebnisse der Bestimmung im positive ion mode sind in Fig. 4 und Tabelle 9 dargestellt.

Beispiel 9: Ergebnisse:

Die folgenden Stärkeeigenschaften und Parameter wurden anhand der oben beschriebenen Verfahren festgestellt:

Tabelle 1: Stärkevergleichsprodukte:

| Abkürzung | Beschreibung | Rohstoff |
|---|---|---|
| MD1 | Maltodextrin DE6 | Wachsmaisstärke |

(fortgesetzt)

| Abkürzung | Beschreibung | Rohstoff |
|---|---|---|
| MD2 | Maltodextrin DE15 | Maisstärke |
| RD1 | Röstdextrin | Kartoffelstärke |
| EMS1 | Modifizierung mit 20 BEU/g Stärke | Wachsmaisstärke |
| EMS2 | Modifizierung mit 100 BEU/g Stärke | Wachsmaisstärke |
| EMS3 | Modifizierung mit 1.000 BEU/g Stärke | Wachsmaisstärke |
| EMS4 | Modifizierung mit 10.000 BEU/g Stärke | Wachsmaisstärke |
| EMS5 | Modifizierung mit 100.000 BEU/g Stärke | Wachsmaisstärke |
| WMS | native Wachsmaisstärke | Wachsmaisstärke |

MD1, MD2, RD1 und WMS dienen als unmodifizierte Vergleichsbeispiele im Rahmen der Erfindung. Erfindungsgemäß enzymatisch modifizierte Stärken (EMS1-5) wurden hier mit Branching Enzym aus *Rhodothermus obamensis* modifiziert. Je nach eingesetzter Enzymmenge wurden, wie folgt gezeigt, unterschiedliche Produkte erhalten. Eine Verlängerung der Reaktionszeit führte zu keiner weiteren Veränderung der Molmasse. Selbstverständlich können auch geringer modifizierte Stärken dadurch erhalten werden, dass die Reaktion früher gestoppt wird. Besonders hohe Klebkraft und/oder eine außergewöhnliche Langzeitstabilität zeigte sich insbesondere bei Proben EMS2, EMS3 und EMS4.

Tabelle 2: Bestimmung der mittlere Molmassen, Polydispersität und durchschnittliche Polymerisationsgrade der Stärken über konventionelle SEC:

| | Mw | Mn | PDI | DPn | DPw |
|---|---|---|---|---|---|
| MD 1 | 27.000 | 2900 | 9,3 | 18 | 167 |
| MD 2 | 4700 | 1500 | 3,1 | 9 | 29 |
| RD 1 | 7660 | 2400 | 3,2 | 15 | 47 |
| EMS 1 | 1200000 | 64000 | 18,8 | 395 | 7407 |
| EMS 2 | 87000 | 19000 | 4,6 | 117 | 537 |
| EMS 3 | 43000 | 13400 | 3,2 | 83 | 265 |
| EMS 4 | 31000 | 14700 | 2,1 | 91 | 191 |
| EMS 5 | 18500 | 8100 | 2,3 | 50 | 114 |

Mw: mittlere Molmasse (Gewichtsmittel); Mn: mittlere Molmasse (Zahlenmittel); PDI: Polydispersionsindex (Mw:Mn); DPn Polymerisationsgrad gemäß dem Zahlenmittel; DPw Polymerisationsgrad gemäß dem Gewichtsmittel;

Tabelle 3: Bestimmung der mittlere Molmassen, Polydispersität und durchschnittliche Polymerisationsgrade der Stärken über Lichtstreuung:

| | Mw | Mn | PDI | DPn | DPw |
|---|---|---|---|---|---|
| MD 1 | 61.200 | 1800 | 34,0 | 11 | 378 |
| MD 2 | 6200 | 2700 | 2,3 | 17 | 38 |
| RD 1 | 8700 | 4500 | 1,9 | 28 | 54 |
| EMS 1 | 5506000 | 719000 | 7,7 | 4438 | 33988 |
| EMS 2 | 234000 | 66500 | 3,5 | 410 | 1444 |
| EMS 3 | 104000 | 67000 | 1,6 | 414 | 642 |
| EMS 4 | 90700 | 54000 | 1,7 | 333 | 560 |
| EMS 5 | 35000 | 19700 | 1,8 | 122 | 216 |

(fortgesetzt)

|  | Mw | Mn | PDI | DPn | DPw |
|---|---|---|---|---|---|
| WMS | > 50000000 | > 5000000 | ca. 10 | > 38.000 | > 300000 |

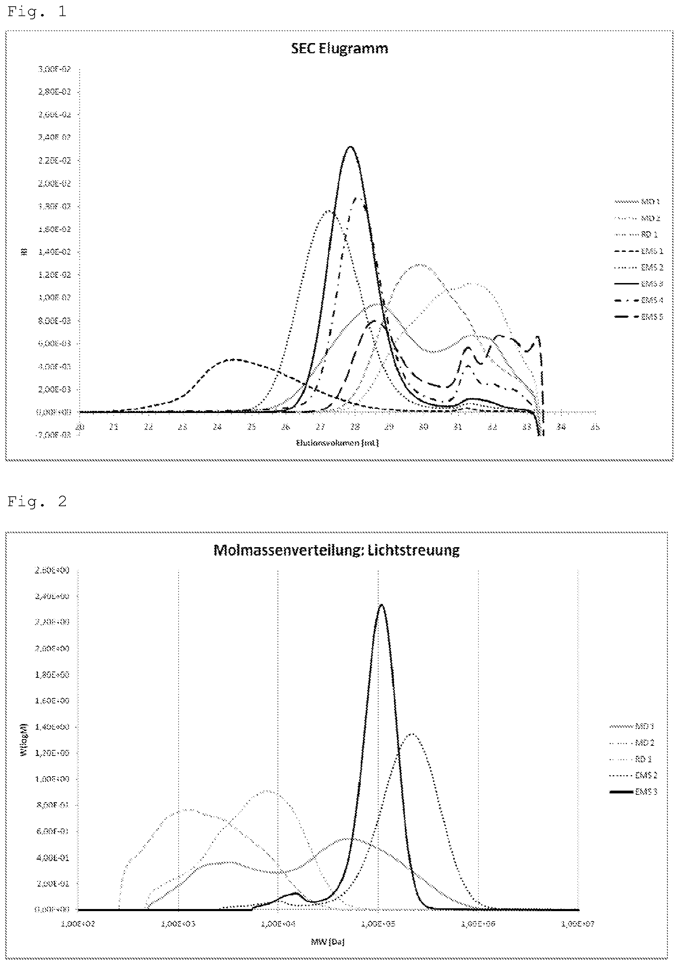

Tabelle 2 und 3 zeigen die Verschiebung der mittleren Molmasse der Stärkemoleküle sowie die Unterschiede je nach Messverfahren. SEC Elugramme und die Molmassenverteilung nach Lichtstreumessung sind des Weiteren in den Figs. 1 und 2 dargestellt. Aus diesen Daten ist klar die homogene Zusammensetzung der erfindungsgemäßen EMS erkennbar, die einen schmalen dominanten Peak zeigt.

Tabelle 4: Oligosaccharidanteil der Stärke:

|  | Glukose [%] | Maltose [%] | Maltotriose [%] | Maltotetraose [%] | Maltopentaose (%) | Maltohexaose (%) |
|---|---|---|---|---|---|---|
| MD1 | 0,05 | 1,4 | 2,2 | 1,7 | 1,3 | 1,3 |
| MD2 | 2,9 | 3,3 | 3,8 | 3,8 | 2,8 | 1,8 |
| RD1 | 0 | 0,1 | 1,4 | 1,3 | 0 | 0 |
| EMS1 | 0 | 0,1 | <0,1 | <0,1 | 0 | 0 |
| EMS2 | 0 | 0,1 | <0,1 | <0,1 | 0 | 0 |
| EMS3 | 0,1 | 0,5 | <0,1 | <0,1 | 0 | 0 |
| EMS4 | 0,0 | 1,1 | 0,8 | 0,5 | 0,4 | 0,4 |
| EMS5 | 0 | 0 | 2,0 | 0,9 | 0,9 | 0,3 |
| WMS |  |  | 0 | 0 | 0 | 0 |

Tabelle 4 zeigt, dass bei der erfindungsgemäßen enzymatischen Modifizierung der Ausgangsstärke kaum niedermolekulare Oligosaccharide anfallen.

Tabelle 5: Produktparameter DE-Wert und Verzweigungsgrad:

|  | DE-Wert | Verzweigungsgrad NMR [%] |
|---|---|---|
| MD1 | 6,4 | 5,1 |
| MD2 | 13,7 | 6,1 |
| RD1 | 6, 6 | ~7 |
| EMS1 | <0,1 | 4,4 |
| EMS2 | <0,1 | 5,2 |
| EMS3 | <0,1 | 7-8 |
| EMS4 | <0,1 | 10,9 |
| EMS5 | <0,1 | 12 |
| WMS | <0,1 | 4,3 |

Gemäß Tabelle 5 zeigt sich die zunehmende Verzweigung durch die enzymatische Modifizierung während der DE-Wert gering bleibt. Diese Parameter zeigen einen deutlichen strukturellen Unterschied zu herkömmlichen industriellen Stärken.

Tabelle 8a: Viskositäts- und Klebkraftbestimmung:

|  | BF-Viskosität 40 % 100rpm |  |  | Klebkraft 40 % |  |  |
|---|---|---|---|---|---|---|
|  | 2h | 14d | SI | 30 μm | 60μm | 120 μm |
| MD1 | 148 | 356 | 2,4 | 58 | 57 | 101 |
| MD2 | 66 | 66 | 1,0 | keine Verklebung |  |  |

(fortgesetzt)

|  | BF-Viskosität 40 % 100rpm | | | Klebkraft 40 % | | |
|---|---|---|---|---|---|---|
| RD1 | 641 | 655 | 1,0 | 100 | 105 | > 150 |
| EMS1 | 8300 | n.m. | > 10 | 14 | 16 | 41 |
| EMS2 | 1048 | 812 | 0,8 | 24 | 33 | 67 |
| EMS3 | 338 | 369 | 1,1 | 45 | 44 | 94 |
| EMS4 | n.b. | n.b. | n.b. | n.b. | n.b. | n.b. |
| EMS5 | n.b. | n.b. | n.b. | n.b. | n.b. | n.b. |
| n.b. - nicht bestimmt wegen zu geringer Materialmenge | | | | | | |
| n.m. - nicht messbar wegen zu hoher Viskosität | | | | | | |

Tabelle 8b: Viskositäts- und Klebkraftbestimmung:

|  | BF-Viskosität 50 % 100rpm | | | Klebkraft 50 % | | |
|---|---|---|---|---|---|---|
|  | 2 h | 14 d | SI | 30 $\mu$m | 60 $\mu$m | 120 $\mu$m |
| MD1 | 550 | n.m. | > 10 | 22 | 38 | 98 |
| MD2 | 138 | 197 | 1,4 | 76 | 115 | 149 |
| RD1 | 3570 | 3576 | 1,0 | 49 | 60 | > 150 |
| EMS1 | n.m. | n.m. | n.m. | n.m. | n.m. | n.m. |
| EMS2 | 7080 | n.m. | > 10 | 17 | 26 | 61 |
| EMS3 | 1770 | 1480 | 0,8 | 34 | 26 | 66 |
| EMS4 | 358 | 354 | 1,0 | 104 | 129 | > 150 |
| EMS5 | 52 | 56 | 1,1 | keine Verklebung | | |

Tabelle 8a und b zeigen die vorteilhaften Stabilitäts- und Klebeeigenschaften der EMS-Stärken, insbesondere von EMS2, EMS3 und EMS4. Diese Stärken zeigten bei allen gemessenen Konzentrationen und Schichtdicken gute Klebeeigenschaften. Während EMS3 und EMS4 optimale Stabilität sowie Klebeeigenschaften in 50% Lösungen zeigte, wurde das Optimum für EMS2 bei einer 40%igen Zusammensetzung erreicht. Weitere Klebkraftbestimmungen von 50%igen Stärkelösungen nach 24 Stunden sind in Fig. 3 gezeigt. Der Stabilitätsindex SI ergibt sich aus dem Quotienten der Viskositätsbestimmung nach 14 Tagen durch die Viskositätsbestimmung nach 2 Stunden, nach Herstellung der wässrigen Stärkekleister. Die erste Viskositätsmessung wurde nach 2 Stunden vorgenommen um konstante Bedingungen, insbesondere eine konstante Messtemperatur zu gewährleisten.

Tabelle 9: m/z-Zahlen der Peaks der MALDI-TOF Massenspektren (Fig. 4) der Glykoamylase-Abbauprodukte gemäß Beispiel 8:

| MD1 | EMS4 | EMS3 | EMS4 (d) |
|---|---|---|---|
| 3433 | 3434 | 3434 | 3435 |
| 3595 | 3596 | 3595 | 3597 |
| 3757 | 3759 | 3757 | 3759 |
| 3919 | 3921 | 3920 | 3921 |
| 4082 | 4083 | 4083 | 4084 |
| 4244 | 4245 | 4244 | 4246 |
| 4407 | 4407 | 4407 | 4408 |
| 4568 | 4570 | 4569 | 4570 |
| 4730 | 4732 | 4731 | 4732 |
| 4893 | 4895 | 4894 | 4895 |

Gemäß diesen Ergebnissen zeigt sich kein erkennbarer Unterschied in der Produktstruktur, abgeleitet von der m/z-Verteilung, im Glukoamylase-resistenten Stärkeanteil zwischen herkömmlichem Maltodextrin (MD1) und den enzymatisch modifizierten Stärken. Dies bedeutet, dass nach Behandlung mit Glukoamylase ein ähnlicher Rückstand zurückbleibt.

**Patentansprüche**

1. Klebstoffzusammensetzung geeignet zum Verkleben von Papier- oder Kartonprodukten umfassend durch Verzweigungsenzym enzymatisch verzweigte Stärke mit einem Viskositätsstabilitätsindex SI von kleiner oder gleich 1,3, bestimmt durch den Quotient aus der Viskosität nach 14 Tagen und der Viskosität nach 2 Stunden nach Herstellung der Zusammensetzung, wobei die Stärke ein mittleres Molekulargewicht $M_W$ (Gewichtsmittel), gemessen durch Lichtstreuung, von 60 kDa bis 3000 kDa hat, wobei eine zum Verkleben geeignete Klebstoffzusammensetzung eine Klebwirkung im Papierrisstest aufweist, worin die Klebstoffzusammensetzung in einer Schichtdicke von 60 $\mu$m zwei Streifen Papier mit 90 g/m$^2$ verklebt, sodass nach 150 s ein Faserriss eines verklebten Papierstreifens beim Auseinanderziehen festgestellt wird.

2. Klebstoffzusammensetzung geeignet zum Verkleben von Papier- oder Kartonprodukten umfassend durch Verzweigungsenzym enzymatisch verzweigte Stärke mit einem Viskositätsstabilitätsindex SI von kleiner oder gleich 1,3, bestimmt durch den Quotient aus der Viskosität nach 14 Tagen und der Viskosität nach 2 Stunden nach Herstellung der Zusammensetzung, wobei die Stärke ein mittleres Molekulargewicht $M_W$ (Gewichtsmittel), gemessen durch Lichtstreuung, von 60 kDa bis 3000 kDa hat, wobei die Klebstoffzusammensetzung eine Viskosität von mindestens 250 mPas aufweist und der Stärkeanteil der Zusammensetzung 25-80 % (Gew.-%) ist.

3. Klebstoffzusammensetzung nach Anspruch 1 oder 2, wobei die Stärke in 25-60% (Gew.-%) in flüssiger Lösung vorgesehen ist.

4. Klebstoffzusammensetzung nach einem der Ansprüche 1 bis 3, wobei die Stärke einen mittleren Verzweigungsgrad von alpha-1,6-Verzweigungen von 4 bis 12% aufweist und/oder wobei die Stärke im Wesentlichen nur alpha-1,6-glykosidische Verzweigungen aufweist.

5. Klebstoffzusammensetzung nach einem der Ansprüche 1 bis 4, wobei die Stärke einen DE-Wert von maximal 1 aufweist.

6. Klebstoffzusammensetzung nach einem der Ansprüche 1 bis 5, wobei die Stärke ein mittleres Molekulargewicht $M_W$ (Gewichstmittel), gemessen durch Lichtstreuung von mindestens 70 kDa, vorzugsweise von mindestens 80 kDa, im speziellen bevorzugt von mindestens 90 kDa, und/oder von bis zu 2500 kDa, vorzugsweise bis zu 2000 kDa, bis zu 1500 kDa, bis zu 1000 kDa, bis zu 800 kDa, bis zu 600 kDa, bis zu 400 kDa, bis zu 200 kDa, bis zu 150 kDa, bis zu 140 kDa, bis zu 135 kDa, bis zu 130 kDa, bis zu 125 kDa, hat.

7. Klebstoffzusammensetzung nach einem der Ansprüche 1 bis 6, wobei die Stärke hoch homogen ist, mit einen Polydispersitätsindex PDI zwischen 1 und 5.

8. Klebstoffzusammensetzung nach einem der Ansprüche 1 bis 7 auf Basis von Wachsmaisstärke, Maisstärke, Kartoffelstärke, Amylopektin-Kartoffelstärke, Reisstärke, Weizenstärke, Tapiocastärke, Sagostärke, vorzugsweise Wachsmaisstärke.

9. Klebstoffzusammensetzung nach einem der Ansprüche 1 bis 8, wobei der Anteil der in einem der Ansprüche 1 bis 8 definierten Stärke mindestens 50% des gesamten Stärkeanteils der Zusammensetzung ausmacht.

10. Klebstoffzusammensetzung nach einem der Ansprüche 1 bis 9, wobei die Stärke durch ein Verzweigungsenzym, vorzugsweise ein Verzweigungsenzym von *Rhodothermus sp.,* modifiziert ist, welches den Verzweigungsgrad im Vergleich zu unmodifizierter Stärke erhöht und/oder die Polydispersität im Vergleich zu unmodifizierter Stärke erniedrigt, insbesondere wobei das Verzweigungsenzym eine 1,4-$\alpha$(-D-glucan:1,4-$\alpha$(-D-glucan 6-$\alpha$-D-(1,4-$\alpha$-D-glucano)-transferase ist (E.C. 2.4.1.18).

11. Klebstoffzusammensetzung nach einem der Ansprüche 1 bis 10 im Wesentlichen frei von niedermolekularen Oligosacchariden mit einem Polymerisationsgrad von kleiner als 3, vorzugsweise wobei der Anteil der niedermolekularen Oligosaccharide weniger als 5 Gew.-% der Stärkemasse ist.

**12.** Verwendung einer Klebstoffzusammensetzung geeignet zum Verkleben von Papier- oder Kartonprodukten umfassend durch Verzweigungsenzym enzymatisch verzweigte Stärke mit einem Viskositätsstabilitätsindex SI von kleiner oder gleich 1,3, bestimmt durch den Quotient aus der Viskosität nach 14 Tagen und der Viskosität nach 2 Stunden nach Herstellung der Zusammensetzung, wobei die Stärke ein mittleres Molekulargewicht $M_W$ (Gewichtsmittel), gemessen durch Lichtstreuung, von 60 kDa bis 3000 kDa hat, vorzugsweise der Zusammensetzung nach einem der Ansprüche 1 bis 11, als Klebstoff oder Kaschiermittel, insbesondere als Klebstoff oder Kaschiermittel für Papier- oder Kartonprodukte, insbesondere bevorzugt für einen Displaykarton.

**13.** Verklebtes Produkt umfassend eine Klebstoffzusammensetzung geeignet zum Verkleben von Papier- oder Kartonprodukten umfassend durch Verzweigungsenzym enzymatisch verzweigte Stärke mit einem Viskositätsstabilitätsindex SI von kleiner oder gleich 1,3, bestimmt durch den Quotient aus der Viskosität nach 14 Tagen und der Viskosität nach 2 Stunden nach Herstellung der Zusammensetzung, wobei die Stärke ein mittleres Molekulargewicht $M_W$ (Gewichtsmittel), gemessen durch Lichtstreuung, von 60 kDa bis 3000 kDa hat, vorzugsweise nach einem der Ansprüche 1 bis 11, als Haftvermittler; vorzugsweise worin das Produkt ein Papier- oder Kartonprodukt ist umfassend mindestens zwei Schichten, wobei mindestens eine Schicht Papier oder Karton umfasst, verbunden durch einen Klebstoff der Ansprüche 1 bis 9, wobei vorzugsweise eine Schicht eine bedruckte oder bedruckbare glatte Oberfläche aufweist, insbesondere auf einer der verklebten Seite gegenüberliegenden Seite der Schicht.

**14.** Verfahren zum Verkleben eines Produkts, vorzugsweise um eines nach Anspruch 13 zu erhalten, umfassend Aufbringen einer Klebstoffzusammensetzung geeignet zum Verkleben von Papier- oder Kartonprodukten umfassend durch Verzweigungsenzym enzymatisch verzweigte Stärke mit einem Viskositätsstabilitätsindex SI von kleiner oder gleich 1,3, bestimmt durch den Quotient aus der Viskosität nach 14 Tagen und der Viskosität nach 2 Stunden nach Herstellung der Zusammensetzung, wobei die Stärke ein mittleres Molekulargewicht $M_W$ (Gewichtsmittel), gemessen durch Lichtstreuung, von 60 kDa bis 3000 kDa hat, vorzugsweise nach Lichtstreuung, von 60 kDa bis 3000 kDa hat, vorzugsweise nach einem der Ansprüche 1 bis 11, auf einer zu Verklebenden Seite des Produkts und Anbringen einer weiteren zu verklebenden Seite auf den aufgebrachten Klebstoff.

**15.** Verfahren zur Herstellung der Stärke einer Klebstoffzusammensetzung der Ansprüche 1 bis 11 durch enzymatische Modifizierung umfassend Kontaktieren einer Ausgangsstärke mit einem Verzweigungsenzym, vorzugsweise aus *Rhodothermus sp.,* einer Menge mit einer Aktivität von 50 BEU bis 20 000 BEU, vorzugsweise 80 BEU bis 10 000 BEU, pro Gramm der Ausgangsstärke; oder Verfahren zur enzymatischen Modifizierung von Stärke, **dadurch gekennzeichnet, dass** die Stärke mit einem Verzweigungsenzym, vorzugsweise aus Rhodothermus sp., kontaktiert wird und dass die mittlere Molmasse des gewünschten modifizierten Stärkeprodukts durch die Anfangsmenge Enzym pro Ausgangsstärke (Gewichtsmenge) gesteuert wird.

**16.** Verfahren zur Herstellung einer Klebstoffzusammensetzung der Ansprüche 1 bis 11 umfassend enzymatische Modifizierung einer Stärke nach Anspruch 15 und Vermischen mit einem wässrigen Lösungsmittel, und optional einem Füllstoff, vorzugsweise einem Silikat, einem Salz, Pufferkomponenten, vorzugsweise Säuren oder Basen, und/oder einem Biozid.

**17.** Klebstoffzusammensetzung auf Stärkebasis geeignet zum Verkleben von Papier- oder Kartonprodukten umfassend eine enzymatisch verzweigte Stärke erhältlich durch Kontaktieren einer Ausgangsstärke mit einem Verzweigungsenzym, vorzugsweise aus *Rhodothermus sp.,* mit einer Aktivität von 50 BEU bis 20 000 BEU, vorzugsweise 80 BEU bis 10 000 BEU, pro Gramm der Ausgangsstärke wobei die Stärke ein mittleres Molekulargewicht Mw (Gewichtsmittel), gemessen durch Lichtstreuung, von 60 kDa bis 3000 kDa hat, wobei eine zum Verkleben geeignete Klebstoffzusammensetzung eine Klebwirkung im Papierrisstest aufweist, worin die Klebstoffzusammensetzung in einer Schichtdicke von 60 $\mu$m zwei Streifen Papier mit 90 g/m$^2$ verklebt, sodass nach 150 s ein Faserriss eines verklebten Papierstreifens beim Auseinanderziehen festgestellt wird, insbesondere bevorzugt wie in einem der Ansprüche 1 bis 11 definiert.

**Claims**

**1.** Adhesive composition suitable for bonding paper or cardboard products, comprising starch that is enzymatically branched by a branching enzyme and has a viscosity stability index SI of less than or equal to 1.3, determined by the quotient of the viscosity after 14 days and the viscosity after 2 hours following preparation of the composition, wherein the starch has an average molecular weight $M_W$ (weight average), measured by light scattering, of from 60 kDa to 3,000 kDa, wherein an adhesive composition suitable for bonding has an adhesive effect in the paper tearing test, in which the adhesive composition bonds together two strips of 90 g/m$^2$ paper at a layer thickness of 60 $\mu$m, such that after 150 seconds, a tear in the fibre of one bonded paper strip is observed when said strips are pulled apart.

2. Adhesive composition suitable for bonding paper or cardboard products, comprising starch that is enzymatically branched by a branching enzyme and has a viscosity stability index SI of less than or equal to 1.3, determined by the quotient of the viscosity after 14 days and the viscosity after 2 hours following preparation of the composition, wherein the starch has an average molecular weight $M_W$ (weight average), measured by light scattering, of from 60 kDa to 3,000 kDa, wherein the adhesive composition has a viscosity of at least 250 mPas and the starch proportion of the composition is from 25 to 80% (wt.%).

3. Adhesive composition according to either claim 1 or claim 2, wherein the starch is provided in a liquid solution in an amount of from 25 to 60% (wt.%).

4. Adhesive composition according to any of claims 1 to 3, wherein the starch has an average degree of alpha-1,6 branching of from 4 to 12%, and/or wherein the starch has substantially only alpha-1,6 glycosidic branches.

5. Adhesive composition according to any of claims 1 to 4, wherein the starch has a DE value of at most 1.

6. Adhesive composition according to any of claims 1 to 5, wherein the starch has an average molecular weight $M_W$ (weight average), measured by light scattering, of at least 70 kDa, preferably at least 80 kDa, particularly preferably at least 90 kDa, and/or up to 2,500 kDa, preferably up to 2,000 kDa, up to 1,500 kDa, up to 1,000 kDa, up to 800 kDa, up to 600 kDa, up to 400 kDa, up to 200 kDa, up to 150 kDa, up to 140 kDa, up to 135 kDa, up to 130 kDa, or up to 125 kDa.

7. Adhesive composition according to any of claims 1 to 6, wherein the starch is highly homogeneous and has a polydispersity index PDI of between 1 and 5.

8. Adhesive composition according to any of claims 1 to 7, which is based on waxy corn starch, corn starch, potato starch, amylopectin potato starch, rice starch, wheat starch, tapioca starch, sago starch, preferably waxy corn starch.

9. Adhesive composition according to any of claims 1 to 8, wherein the proportion of the starch defined in any of claims 1 to 8 constitutes at least 50% of the total starch proportion of the composition.

10. Adhesive composition according to any of claims 1 to 9, wherein the starch is modified by a branching enzyme, preferably a branching enzyme of *Rhodothermus sp.,* and this increases the degree of branching by comparison with unmodified starch and/or reduces the polydispersity by comparison with unmodified starch, in particular wherein the branching enzyme is a 1,4-$\alpha$-D-glucan:1,4-$\alpha$-D-glucan 6-$\alpha$-D-(1,4-$\alpha$-D-glucano)-transferase (E.C. 2.4.1.18).

11. Adhesive composition according to any of claims 1 to 10, which is substantially free of low-molecular oligosaccharides having a degree of polymerisation of less than 3, preferably wherein the proportion of the low-molecular oligosaccharides is less than 5 wt.% of the starch weight.

12. Use of an adhesive composition suitable for bonding paper or cardboard products, comprising starch that is enzymatically branched by a branching enzyme and has a viscosity stability index SI of less than or equal to 1.3, determined by the quotient of the viscosity after 14 days and the viscosity after 2 hours following preparation of the composition, wherein the starch has an average molecular weight $M_W$ (weight average), measured by light scattering, of from 60 kDa to 3,000 kDa, preferably of the composition according to any of claims 1 to 11, as an adhesive or laminant, in particular as an adhesive or laminant for paper or cardboard products, particularly preferably for cardboard for displays.

13. Bonded product comprising an adhesive composition suitable for bonding paper or cardboard products, comprising starch that is enzymatically branched by a branching enzyme and has a viscosity stability index SI of less than or equal to 1.3, determined by the quotient of the viscosity after 14 days and the viscosity after 2 hours following preparation of the composition, wherein the starch has an average molecular weight $M_W$ (weight average), measured by light scattering, of from 60 kDa to 3,000 kDa, preferably according to any of claims 1 to 11, as an adhesion promoter, preferably wherein the product is a paper or cardboard product comprising at least two layers, wherein at least one layer comprises paper or cardboard, which layers are connected by an adhesive according to claims 1 to 9, wherein preferably one layer has a smooth surface that is or can be printed on, in particular on a side of the layer that is opposite the bonded side.

14. Method for bonding a product, preferably in order to obtain a product according to claim 13, comprising applying an adhesive composition, preferably according to any of claims 1 to 11, to a side of the product that is to be bonded, which composition is suitable for bonding paper or cardboard products and comprises starch that is enzymatically branched by a branching enzyme and has a viscosity stability index SI of less than or equal to 1.3, determined by the quotient of the viscosity after 14 days and the viscosity after 2 hours following preparation of the composition, wherein the starch has an average molecular weight $M_W$ (weight average), measured by light scattering, of from 60 kDa to 3,000 kDa, and attaching a further side to be bonded to the applied adhesive.

15. Method for preparing the starch of an adhesive composition according to claims 1 to 11 by enzymatic modification, comprising bringing a starting starch into contact with a branching enzyme, preferably consisting of *Rhodothermus sp.,* in an amount having an activity of from 50 BEU to 20,000 BEU, preferably from 80 BEU to 10,000 BEU, per gram of the starting starch, or method for enzymatically modifying starch, **characterised in that** the starch is brought into contact with a branching enzyme, preferably consisting of *Rhodothermus sp.,* and **in that** the average molar mass of the desired modified starch product is controlled by the starting amount of enzyme per starting starch (amount by weight).

16. Method for preparing an adhesive composition according to claims 1 to 11, comprising enzymatically modifying a starch according to claim 15 and mixing said starch with an aqueous solvent, and optionally a filler, preferably a silicate, a salt, buffer components, preferably acids or bases, and/or a biocide.

17. Adhesive composition based on starch suitable for bonding paper or cardboard products, comprising an enzymatically branched starch that can be obtained by bringing a starting starch into contact with a branching enzyme, preferably consisting of *Rhodothermus sp.,* having an activity of from 50 BEU to 20,000 BEU, preferably from 80 BEU to 10,000 BEU, per gram of the starting starch, wherein the starch has an average molecular weight $M_W$ (weight average), measured by light scattering, of from 60 kDA to 3,000 kDa, wherein an adhesive composition suitable for bonding has an adhesive effect in the paper tearing test, in which the adhesive composition bonds together two strips of 90 g/m$^2$ paper at a layer thickness of 60 $\mu$m, such that after 150 seconds, a tear in the fibre of one bonded paper strip is observed when said strips are pulled apart, particularly preferably as defined in any of claims 1 to 11.

**Revendications**

1. Composition adhésive adaptée au collage de produits en papier ou en carton, comprenant de l'amidon ramifié de manière enzymatique par une enzyme branchante et présentant un indice de stabilité de viscosité SI inférieur ou égal à 1,3, déterminé par le quotient de la viscosité après 14 jours et de la viscosité après 2 heures après obtention de la composition, l'amidon présentant une masse moléculaire moyenne $M_W$ (moyenne en poids), mesurée par diffusion de lumière, de 60 kDa à 3 000 kDa, une composition adhésive adaptée au collage présentant un pouvoir collant lors du test de déchirure du papier, dans lequel la composition, dans une épaisseur de couche de 60 $\mu$m, colle deux bandes de papier de 90 g/m$^2$, de sorte qu'après 150 s, une déchirure fibreuse d'une bande de papier collée est constatée lors de la séparation.

2. Composition adhésive adaptée au collage de produits en papier ou en carton, comprenant de l'amidon ramifié de manière enzymatique par une enzyme branchante et présentant un indice de stabilité de viscosité SI inférieur ou égal à 1,3, déterminé par le quotient de la viscosité après 14 jours et de la viscosité après 2 heures après obtention de la composition, l'amidon présentant une masse moléculaire moyenne $M_W$ (moyenne en poids), mesurée par diffusion de lumière, de 60 kDa à 3000 kDa, la composition adhésive présentant une viscosité d'au moins 250 mPas et la part d'amidon de la composition étant de 25-80 % (% en poids).

3. Composition adhésive selon la revendication 1 ou 2, l'amidon étant prévu à 25-60 % (% en poids) dans la solution liquide.

4. Composition adhésive selon l'une quelconque des revendications 1 à 3, l'amidon présentant un degré de ramification moyen de ramifications alpha-1,6 de 4 à 12 % et/ou l'amidon ne présentant sensiblement que des ramifications alpha-1,6-glycosidiques.

**5.** Composition adhésive selon l'une quelconque des revendications 1 à 4, l'amidon présentant une valeur DE de maximum 1.

**6.** Composition adhésive selon l'une quelconque des revendications 1 à 5, l'amidon présentant une masse moléculaire moyenne $M_W$ (moyenne en poids), mesurée par diffusion de lumière d'au moins 70 kDa, de préférence d'au moins 80 kDa, de manière particulièrement préférée d'au moins 90 kDa, et/ou jusqu'à 2 500 kDa, de préférence jusqu'à 2 000 kDa, jusqu'à 1 500 kDa, jusqu'à 1 000 kDa, jusqu'à 800 kDa, jusqu'à 600 kDa, jusqu'à 400 kDa, jusqu'à 200 kDa, jusqu'à 150 kDa, jusqu'à 140 kDa, jusqu'à 135 kDa, jusqu'à 130 kDa, jusqu'à 125 kDa.

**7.** Composition adhésive selon l'une quelconque des revendications 1 à 6, l'amidon étant très homogène, en présentant un indice de polydispersité PDI compris entre 1 et 5.

**8.** Composition adhésive selon l'une quelconque des revendications 1 à 7 à base d'amidon de maïs cireux, d'amidon de maïs, d'amidon de pomme de terre, d'amidon de pomme de terre amylopectine, d'amidon de riz, d'amidon de blé, d'amidon de tapioca, d'amidon de sagou, de préférence d'amidon de maïs cireux.

**9.** Composition adhésive selon l'une quelconque des revendications 1 à 8, la part de l'amidon défini dans l'une des revendications 1 à 8 représentant au moins 50 % de la part totale d'amidon de la composition.

**10.** Composition adhésive selon l'une quelconque des revendications 1 à 9, l'amidon étant modifié par un système de ramification, de préférence un système de ramification de Rhodothermus sp., lequel augmente le degré de ramification en comparaison d'un amidon non modifié et/ou diminue la polydispersité en comparaison d'un amidon non modifié, le système de ramification étant en particulier une transférase 1,4-$\alpha$-D-glucane:1,4-$\alpha$-D-glucane 6-$\alpha$-D-(1,4-$\alpha$-D-glucano) (E.C. 2.4.1.18).

**11.** Composition adhésive selon l'une quelconque des revendications 1 à 10 sensiblement exempte d'oligosaccharides de bas poids moléculaire présentant un degré de polymérisation inférieur à 3, la part des oligosaccharides de bas poids moléculaire étant de préférence inférieure à 5 % en poids de la masse de l'amidon.

**12.** Utilisation d'une composition adhésive adaptée au collage de produits en papier ou en carton comportant de l'amidon ramifié de manière enzymatique par un système de ramification et présentant un indice de stabilité de viscosité SI inférieur ou égal à 1,3, déterminé par le quotient de la viscosité après 14 jours et de la viscosité après 2 heures après obtention de la composition, l'amidon présentant une masse moléculaire moyenne $M_W$ (moyenne en poids), mesurée par diffusion de lumière, de 60 kDa à 3 000 kDa, de préférence de la composition selon l'une quelconque des revendications 1 à 11, comme adhésif ou moyen de contrecollage pour des produits en papier ou en carton, en particulier de préférence pour une boîte-présentoir.

**13.** Produit collé comprenant une composition adhésive adaptée au collage de produits en papier ou en carton comportant de l'amidon ramifié de manière enzymatique par un système de ramification et présentant un indice de stabilité de viscosité SI inférieur ou égal à 1,3, déterminé par le quotient de la viscosité après 14 jours et de la viscosité après 2 heures après obtention de la composition, l'amidon présentant une masse moléculaire moyenne $M_W$ (moyenne en poids), mesurée par diffusion de lumière, de 60 kDa à 3 000 kDa, de préférence selon l'une quelconque des revendications 1 à 11, comme agent de couplage ; dans lequel le produit est de préférence un produit en papier ou en carton comprenant au moins deux couches, au moins une couche comportant du papier ou du carton, relié par un adhésif des revendications 1 à 9, une couche présentant de préférence une surface lisse imprimée ou pouvant être imprimée, en particulier sur une face, opposée à la face collée, de la couche.

**14.** Procédé de collage d'un produit, de préférence pour obtenir un produit selon la revendication 13, comprenant l'application d'une composition adhésive adaptée au collage de produits en papier ou en carton comportant de l'amidon ramifié de manière enzymatique par un système de ramification et présentant un indice de stabilité de viscosité SI inférieur ou égal à 1,3, déterminé par le quotient de la viscosité après 14 jours et de la viscosité après 2 heures après obtention de la composition, l'amidon présentant une masse moléculaire moyenne $M_W$ (moyenne en poids), mesurée par diffusion de lumière, de 60 kDa à 3000 kDa, de préférence selon l'une quelconque des revendications 1 à 11, sur une face à coller du produit et la fixation d'une autre face à coller sur l'adhésif appliqué.

**15.** Procédé d'obtention de l'amidon d'une composition adhésive selon l'une quelconque des revendications 1 à 11 par modification enzymatique, comprenant la mise en contact d'un amidon de départ avec un système de ramification, de préférence fait de Rhodothermus sp., d'une quantité présentant une activité de 50 BEU à 20 000 BEU, de préférence 80 BEU à 10 000 BEU, par gramme de l'amidon de départ ; ou procédé de modification enzymatique de l'amidon, **caractérisé en ce que** l'amidon est mis en contact avec une enzyme de ramification, de préférence fait de Rhodothermus sp., et **en ce que** la masse moléculaire moyenne du produit d'amidon modifié souhaité est commandée par la quantité de départ d'enzyme par amidon de départ (quantité en poids).

16. Procédé d'obtention d'une composition adhésive des revendications 1 à 11, comprenant la modification enzymatique d'un amidon selon la revendication 15 et le mélange à un solvant aqueux, et éventuellement à une charge, de préférence un silicate, un sel, des composants tampons, de préférence des acides ou des bases, et/ou un biocide.

17. Composition adhésive à base d'amidon adaptée au collage de produits en papier ou en carton comprenant un amidon ramifié de manière enzymatique pouvant être obtenu par mise en contact d'un amidon de départ avec un système de ramification, de préférence fait de Rhodothermus sp., présentant une activité de 50 BEU à 20 000 BEU, de préférence 80 BEU à 10 000 BEU, par gramme de l'amidon de départ, l'amidon présentant une masse moléculaire moyenne Mw (moyenne en poids), mesurée par diffusion de lumière, de 60 kDa à 3 000 kDa, une composition adhésive adaptée au collage présentant un pouvoir collant lors du test de déchirure du papier, la composition, dans une épaisseur de couche de 60 $\mu$m, collant deux bandes de papier de 90 g/m$^2$, de sorte qu'après 150 s, une déchirure fibreuse d'une bande de papier collée est constatée lors de la séparation, comme cela est défini de manière particulièrement préférée dans l'une des revendications 1 à 11.

Fig. 1

Fig. 2

Fig. 3

**Klebkraftmessungen der 50 % Leime nach 24h**

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0990687 A2
- EP 1369432 A2
- WO 0018893 A1
- US 20030109010 A
- WO 03106502 A1
- WO 0058445 A1
- EP 0690170 B1

**In der Beschreibung aufgeführte Nicht-Patentliteratur**

- **HIZUKURI et al.** *Carbohydrate Research,* 1981, vol. 94, 205-213
- **GUNILLA S. NILSSON et al.** *Starch/Stärke,* 1996, vol. 48 (10), 352-357
- **TAKATA et al.** *Applied and Environmental microbiology,* 1994, vol. 60 (9), 3097
- **R.L. WHISTLER.** Starch: Chemistry and Technology. 1984
- Modified Starches: Properties and Uses. CRC Press, 1986
- Cationic Starches. **D.B. SOLARECK.** Modified Starches: Properties and Uses. CRC Press Inc, 1986, 113-130
- Modified Starches: Properties and Uses. **D.B. SOLARECK.** Cationic Starches. CRC Press Inc, 1986, 113-130